(19) Europäisches Patentamt
European Patent Office
Office européen des brevets

(11) **EP 2 235 098 B1**

(12) **EUROPÄISCHE PATENTSCHRIFT**

(45) Veröffentlichungstag und Bekanntmachung des Hinweises auf die Patenterteilung:
**20.03.2013 Patentblatt 2013/12**

(21) Anmeldenummer: **09702394.9**

(22) Anmeldetag: **06.01.2009**

(51) Int Cl.:
*C08J 9/32* (2006.01)     *B29C 70/66* (2006.01)
*C09J 107/00* (2006.01)     *C09J 109/02* (2006.01)
*C09J 109/06* (2006.01)     *C09J 123/02* (2006.01)
*C09J 123/08* (2006.01)     *C09J 123/22* (2006.01)
*C09J 201/00* (2006.01)     *C08K 7/22* (2006.01)

(86) Internationale Anmeldenummer:
**PCT/EP2009/050072**

(87) Internationale Veröffentlichungsnummer:
**WO 2009/090119 (23.07.2009 Gazette 2009/30)**

(54) **GESCHÄUMTE, INSBESONDERE DRUCKEMPFINDLICHE KLEBEMASSE, VERFAHREN ZUR HERSTELLUNG SOWIE DIE VERWENDUNG DERSELBEN**

FOAMED, IN PARTICULAR PRESSURE-SENSITIVE ADHESIVE, PROCESS FOR PRODUCING IT AND THE USE THEREOF

MATIÈRE ADHÉSIVE MOUSSÉE, EN PARTICULIER SENSIBLE À LA PRESSION, PROCÉDÉ DE FABRICATION ET UTILISATION DE CETTE MATIÈRE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **14.01.2008 DE 102008004388**

(43) Veröffentlichungstag der Anmeldung:
**06.10.2010 Patentblatt 2010/40**

(73) Patentinhaber: **TESA SE**
**20253 Hamburg (DE)**

(72) Erfinder:
• **BURMEISTER, Axel**
**22527 Hamburg (DE)**

• **KREFT, Christian**
**20255 Hamburg (DE)**
• **CZERWONATIS, Franziska**
**21075 Hamburg (DE)**
• **BHANDARI, Sabine, Dr.**
**20457 Hamburg (DE)**
• **BÜNZ, Stephan**
**25746 Ostrohe (DE)**

(56) Entgegenhaltungen:
EP-A- 0 257 984     US-A1- 2006 173 087
US-A1- 2006 177 652     US-A1- 2007 014 984

**Beschreibung**

Die Erfindung beschreibt eine mit expandierten polymeren Mikrohohlkugeln, so genannten Mikroballons geschäumte, insbesondere druckempfindliche Klebemasse, Verfahren zur Herstellung sowie die Verwendung derselben insbesondere in einem Klebeband.

Mikroballon geschäumte (Selbst-)Klebemassen sind seit langem bekannt und beschrieben. Sie zeichnen sich durch eine definierte Zellstruktur mit einer gleichmäßigen Größenverteilung der Schaumzellen aus. Es sind geschlossenzellige Mikroschäume ohne Kavitäten, wodurch im Vergleich zu offenzelligen Varianten eine bessere Dichtung empfindlicher Güter gegen Staub und flüssige Medien erzielt werden kann.

Durch ihre flexible, thermoplastische Polymerschale besitzen derartige Schäume eine höhere Anpassungsfähigkeit als solche, die mit nicht expandierbaren, nicht polymeren Mikrohohlkugeln (Glashohlkugeln) gefüllt sind. Sie eignen sich besser zum Ausgleich von Fertigungstoleranzen wie sie zum Beispiel bei Spritzgussteilen die Regel sind und können aufgrund ihres Schaumcharakters auch thermische Spannungen besser kompensieren.

Des Weiteren können durch die Auswahl des thermoplastischen Harzes der Polymerschale die mechanischen Eigenschaften des Schaums weiter beeinflusst werden. So ist es beispielsweise möglich, selbst dann, wenn der Schaum eine geringere Dichte als die Matrix aufweist, Schäume mit höherer Kohäsionsfestigkeit als mit der Polymermatrix allein herzustellen. So können typische Schaumeigenschaften wie die Anpassungsfähigkeit an raue Untergründe mit einer hohen Kohäsionsfestigkeit für PSA-Schäume kombiniert werden.

Klassisch chemisch oder physikalisch geschäumte Materialien sind demgegenüber für ein irreversibles Zusammenfallen unter Druck und Temperatur anfälliger. Auch die Kohäsionsfestigkeit ist hier niedriger.

In der DE 21 05 877 C wird ein Klebeband aufgezeigt, das aus einem Träger besteht, der auf mindestens einer Seite mit einem mikrozellulären druckempfindlichen Klebstoff beschichtet ist und dessen Klebstoffschicht einen Keimbildner enthält, wobei die Zellen der Klebstoffschicht geschlossen und vollständig in der Klebstoffschicht verteilt sind. Dieses Klebeband kann sich der unregelmäßigen Oberfläche, auf die es gebracht wird, anpassen und somit zu einer relativ dauerhaften Verklebung führen, zeigt aber andererseits auch nur eine geringe Erholung, wenn es auf die Hälfte der ursprünglichen Dicke zusammengedrückt worden ist. Die Hohlräume in der Klebmasse bieten Ansätze für seitliches Eintreten von Lösungsmitteln und Wasser in die Klebfuge was sehr unerwünscht ist. Weiterhin kann der vollständige Durchtritt von Lösungsmitteln oder Wasser durch das gesamte Klebeband nicht ausgeschlossen werden.

In der EP 0 257 984 A1 werden Klebebänder offenbart, die zumindest einseitig eine geschäumte Klebebeschichtung aufweisen. In dieser Klebebeschichtung sind Polymerkügelchen enthalten, die ihrerseits eine Flüssigkeit aus Kohlenwasserstoffen enthalten und bei erhöhten Temperaturen expandieren. Die Gerüstpolymere der Selbstklebemassen können aus Kautschuken oder Polyacrylaten bestehen. Die Mikrohohlkugeln werden hier entweder vor oder nach der Polymerisation zugesetzt. Die Mikroballons enthaltenen Selbstklebemassen werden aus Lösemittel verarbeitet und zu Klebebändern ausgeformt. Der Schritt der Schäumung erfolgt dabei konsequent nach der Beschichtung. So werden mikroraue Oberflächen erhalten. Daraus resultieren Eigenschaften wie insbesondere zerstörungsfreie Wiederablösbarkeit und Repositionierbarkeit. Der Effekt der besseren Repositionierbarkeit durch mikroraue Oberflächen von mit Mikroballon geschäumten Selbstklebemassen wird auch in weiteren Schriften wie DE 35 37 433 A1 oder WO 95/31225 A1 beschrieben.

Die mikroraue Oberfläche wird verwendet, um eine blasenfreie Verklebung zu erzeugen. Diese Verwendung offenbaren auch die EP 0 693 097 A1 und die WO 98/18878 A1. Den vorteilhaften Eigenschaften der mikrorauen Oberfläche steht aber immer eine deutliche Reduzierung der Verklebungsfestigkeit beziehungsweise der Schälfestigkeit gegenüber. Deswegen wird in der DE 197 30 854 A1 eine mit Mikroballons aufgeschäumte Trägerschicht vorgeschlagen, welche zur Vermeidung des Verklebungsfestigkeitsverlustes die Verwendung von ungeschäumten druckempfindlichen Selbstklebemassen ober- und unterhalb eines geschäumten Kerns vorschlägt.

Die Anfertigung der Trägermischung findet vorzugsweise in einem für die Elastomer-Compoundierung typischen Innenmischer statt. Die Mischung wird dabei insbesondere auf einen Mooneywert $ML_{1+3}$ (100 °C) im Bereich von 10 bis 80 eingestellt. Der Mischung werden in einem zweiten kühlen Arbeitsgang mögliche Vernetzer, Beschleuniger und die gewünschten Mikroballons zugesetzt. Dieser zweite Arbeitsgang findet vorzugsweise bei Temperaturen kleiner 70 °C in einem Kneter, Innenmischer, Mischwalzwerk oder Doppelschneckenextruder statt. Die Mischung wird anschließend auf Maschinen auf die gewünschte Dicke extrudiert und/oder kalandert. Anschließend wird der Träger beidseitig mit einer druckempfindlichen Selbstklebemasse versehen. Darauf folgen die Schritte der thermischen Schäumung und gegebenenfalls der Vernetzung.

Die Expansion der Mikroballons kann dabei entweder vor dem Einarbeiten derselben in die Polymermatrix erfolgen oder erst nach dem Ausformen der Polymermatrix zu einem Träger.

In expandierter Form hat die Hülle der Mikroballons nur eine Dicke von 0,02 μm. Demnach ist die vorgeschlagene Expansion der Mikroballons noch vor dem Einarbeiten in die Polymermatrix des Trägermaterials nachteilig, da hierbei durch die hohen Kräfte bei der Einarbeitung viele Ballons zerstört werden und der Schäumungsgrad somit reduziert wird. Weiterhin führen teilweise geschädigte Mikroballons zu Dickenschwankungen. Ein robuster Herstellprozess ist kaum zu erreichen. Entsprechend wird favorisiert, die Schäumung nach der bahnförmigen Ausformung in einem Thermokanal durchzuführen. Aber auch hierbei kommt es leicht zu stärkeren Abweichungen der mittleren Trägerdicke von der gewünschten Dicke aufgrund von nicht exakt konstanten Bedingungen des Gesamtprozesses vor der Schäumung sowie nicht exakt konstanter Bedingungen im Thermokanal während der Schäumung. Eine gezielte Korrektur der Dicke ist nicht mehr möglich. Ebenso müssen erhebliche statistische Abweichungen in der Dicke in Kauf genommen werden, da sich lokale Abweichungen in der Konzentration von Mikroballons und auch anderer Trägerbestandteile direkt in Dickenschwankungen bemerkbar machen.

Einen ähnlichen Weg beschreibt die WO 95/32851 A1. Hier wird vorgeschlagen, zwischen geschäumtem Träger und Selbstklebemasse zusätzliche thermoplastische Schichten vorzusehen.

Beide Wege erfüllen zwar die Forderung der hohen Schälfestigkeit, führen aber zwangsläufig auch zu Produkten mit höherer Anfälligkeit, weil die einzelnen Schichten unter Belastung zu Verankerungsbrüchen führen. Darüber hinaus wird die gewünschte Anpassungsfähigkeit solcher Produkte deutlich eingeschränkt, weil der geschäumte Anteil eines Aufbaus zwangsläufig reduziert wird.

In der EP 1 102 809 A1 wird ein Verfahren vorgeschlagen, in dem die Mikroballons teilweise vor Austritt aus einer Beschichtungsdüse expandieren und gegebenenfalls durch einen nachgeschalteten Schritt zur vollständigen Expansion gebracht werden.

Dieses Verfahren führt zu Produkten mit deutlich geringerer Oberflächenrauigkeit und damit verbundenem geringerem Abfall der Schälfestigkeit. Allerdings ist es in seiner Funktion bei der Masseviskosität stark limitiert. Hoch viskose Massesysteme führen unweigerlich im Düsenspalt zu einem hohen Spaltdruck, welcher die expandierten Mikroballons komprimiert beziehungsweise verformt. Nach Austritt aus der Düse nehmen die Mikroballons wieder ihre Ursprungsform an und durchbrechen die Klebemassenoberfläche. Dieser Effekt verstärkt sich durch zunehmende Masseviskosität, abnehmende Schichtdicke und sinkendes Raumgewicht beziehungsweise steigenden Mikroballonanteil.

Aufgabe der vorliegenden Erfindung ist es, die Nachteile der bisherigen Verfahren zur Herstellung von mit Mikroballons geschäumten Klebemassen auszuräumen, sprich die Nachteile der rauen Oberflächen und die daraus resultierenden niedrigen Klebkräfte auch bei geringen Raumgewichten beziehungsweise hohen Schäumungsraten oder die Notwendigkeit einer zusätzlichen Nachstrichmasse bei einem geschäumten Träger zu vermeiden.

Gelöst wird diese Aufgabe durch Verfahren zur Herstellung einer bevorzugt druckempfindlichen Klebemasse, die expandierte Mikroballons enthält, wie sie in den Verfahrensansprüchen dargelegt sind. Gegenstand der Ansprüche sind auch vorteilhafte Ausführungen des Erfindungsgegenstandes sowie die Verwendung der erfindungsgemäß hergestellten Klebemasse in ein- oder beidseitig klebenden Klebebändern.

Demgemäß betrifft die Erfindung eine insbesondere druckempfindliche Klebemasse, die expandierte Mikroballons enthält, wobei die Klebkraft der die expandierten Mikroballons enthaltende Klebemasse im Vergleich zu der Klebkraft einer flächengewichts- und rezepturidentischen Klebemasse, die durch die Zerstörung der durch die expandierten Mikroballons entstandenen Hohlräume entschäumt ist, um höchstens 30 %, bevorzugt um höchstens 20 %, besonders bevorzugt um höchstens 10 % reduziert ist.

Die Ausformung der Klebemasse zu einer Schicht erfolgt mittels eines Ausformaggregats, insbesondere ein Kalander, ein Walzenauftragswerk oder ein Spalt, gebildet von einer Walzen und einem feststehenden Rakel, wobei die expandierten Mikroballons in die Polymermatrix der Klebemasse zurückgedrückt werden.

Gemäß einer bevorzugten Ausführungsform der Erfindung ist die Klebkraft der die expandierten Mikroballons enthaltende Klebemasse im Vergleich zu der Klebkraft einer flächengewichts- und rezepturidentischen Klebemasse, die durch die Zerstörung der durch die expandierten Mikroballons entstandenen Hohlräume entschäumt ist, nicht reduziert.

Weiter vorzugsweise ist die Klebkraft der die expandierten Mikroballons enthaltende Klebemasse im Vergleich zu der Klebkraft einer flächengewichts- und rezepturidentischen Klebemasse, die durch die Zerstörung der durch die expandierten Mikroballons entstandenen Hohlräume entschäumt ist, höher, bevorzugt um 10 bis 30 %.

Gemäß einer weiteren vorteilhaften Ausführungsform weist die Klebemasse eine Oberflächenrauigkeit von kleiner oder gleich 10 $\mu$m auf.

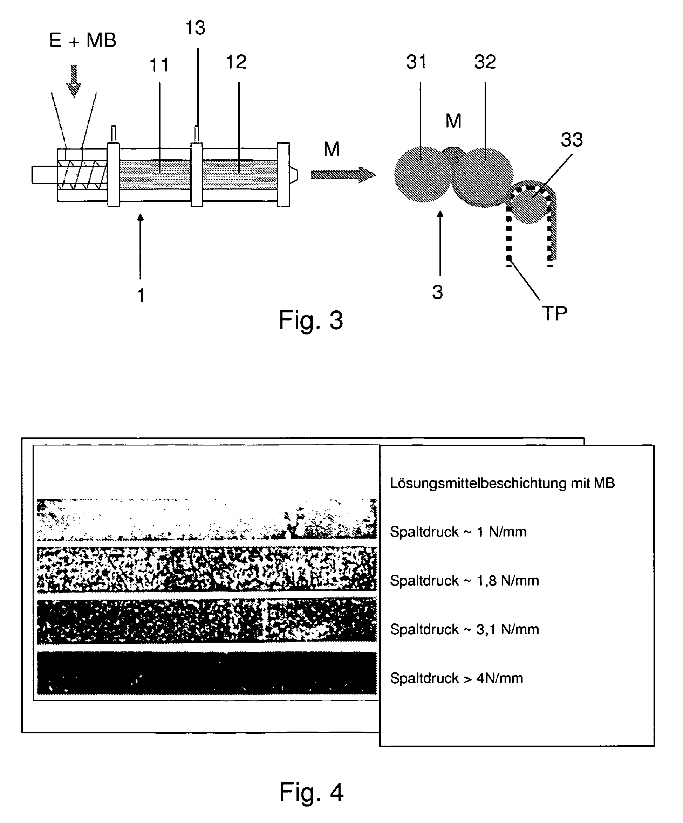

Weiterhin umfasst die Erfindung ein Verfahren zur Herstellung einer ebenso bevorzugt druckempfindlichen Klebemasse, die expandierte Mikroballons enthält, siehe Figur 3, wobei

- die Bestandteile zur Bildung der Klebemasse wie Polymere, Harze oder Füllstoffe und nicht expandierten Mikroballons in einem ersten Mischaggregat gemischt werden und unter Überdruck auf Expansionstemperatur erhitzt werden
- die Mikroballons beim Austritt aus dem Mischaggregat expandiert werden,
- die Klebemassemischung mitsamt der expandierten Mikroballons in einem Walzenauftragswerk zu einer Schicht ausgeformt wird, wobei die expandierten Mikroballons in die Polymermatrix der Klebemasse zurückgedrückt werden,
- die Klebemassemischung mitsamt der expandierten Mikroballons gegebenenfalls auf ein bahnförmiges Träger- oder Releasematerial aufgebracht wird.

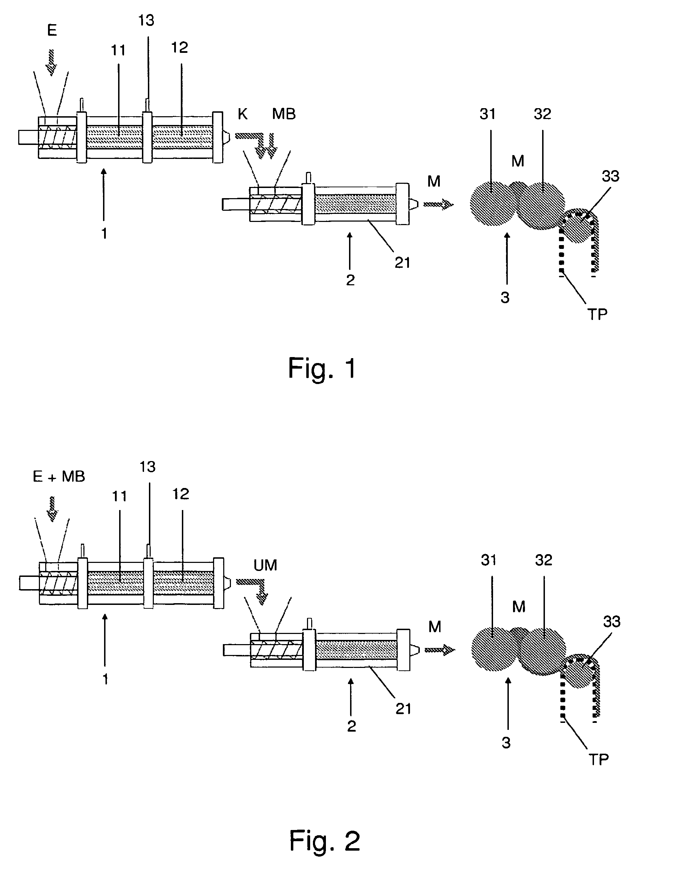

Ebenso umfasst die Erfindung ein Verfahren zur Herstellung einer ebenso bevorzugt druckempfindlichen Klebemasse, die expandierte Mikroballons enthält, siehe Figur 2, wobei

- die Bestandteile zur Bildung der Klebemasse wie Polymere, Harze oder Füllstoffe mit nicht expandierten Mikroballons in einem ersten Mischaggregat unter Überdruck gemischt werden und auf eine Temperatur unterhalb der Expansionstemperatur der Mikroballons temperiert werden,
- die gemischte, insbesondere homogene Klebemasse aus dem ersten Mischaggregat in ein zweites Aggregat übergeben werden und unter Überdruck auf Expansionstemperatur erhitzt werden
- die Mikroballons in dem zweiten Aggregat oder beim Austritt aus dem zweiten Aggregat expandiert werden,
- die Klebemassemischung mitsamt der expandierten Mikroballons in einem Walzenauftragswerk zu einer Schicht ausgeformt wird, wobei die expandierten Mikroballons in die Polymermatrix der Klebemasse zurückgedrückt werden
- die Klebemassemischung mitsamt der expandierten Mikroballons gegebenenfalls auf ein bahnförmiges Träger- oder Releasematerial aufgebracht wird.

Ebenso betrifft die Erfindung ein Verfahren zur Herstellung einer wiederum bevorzugt druckempfindlichen Klebemasse, die expandierte Mikroballons enthält, siehe Figur 1, wobei

- die Bestandteile zur Bildung der Klebemasse wie Polymere, Harze oder Füllstoffe in einem ersten Mischaggregat gemischt werden,
- die gemischte, insbesondere homogene Klebemasse aus dem ersten Mischaggregat in ein zweites Mischaggregat übergeben wird, in das gleichzeitig die nicht expandierten Mikroballons aufgegeben werden,
- die Mikroballons in dem zweiten Mischaggregat oder beim Austritt aus dem zweiten Mischaggregat expandiert werden,
- die Klebemassemischung mitsamt der expandierten Mikroballons in einem Walzenauftragswerk zu einer Schicht ausgeformt wird, wobei die expandierten Mikroballons in die Polymermatrix der Klebemasse zurückgedrückt werden
- die Klebemassemischung mitsamt der expandierten Mikroballons gegebenenfalls auf ein bahnförmiges Träger- oder Releasematerial aufgebracht wird.

Gemäß einer bevorzugten Ausführungsform der Erfindung wird die Klebemasse in einem Walzenauftragswerk ausgeformt und auf das Trägermaterial aufgebracht.

Mikroballons geschäumte Massen müssen in der Regel vor der Beschichtung nicht entgast werden, um einen gleichmäßiges, geschlossenes Beschichtungsbild zu erhalten. Die expandierenden Mikroballons verdrängen die während der Compoundierung in die Klebemasse eingeschlossene Luft. Bei hohen Durchsätzen ist es dennoch ratsam, die Massen vor der Beschichtung zu entgasen, um eine gleichmäßige Massevorlage im Walzenspalt zu erhalten. Die Entgasung erfolgt idealerweise unmittelbar vor dem Walzenauftragswerk bei Mischtemperatur und einem Differenzdruck zum Umgebungsdruck von mindestens 200 mbar.

Des Weiteren ist vorteilhaft, wenn

- das erste Mischaggregat ein kontinuierliches Aggregat ist, insbesondere ein Planetwalzenextruder, ein Doppelschneckenextruder oder ein Stiftextruder,
- das erste Mischaggregat ein diskontinuierliches Aggregat ist, insbesondere ein Z-Kneter oder ein Innenmischer,
- das zweite Mischaggregat ein Planetwalzenextruder, ein Einschnecken- oder Doppelschneckenextruder oder ein Stiftextruder und/oder
- das Ausformaggregat, in dem die Klebemasse mitsamt der expandierten Mikroballons zu einer Trägerschicht ausgeformt wird, ein Kalander, ein Walzenauftragswerk oder ein Spalt, gebildet von einer Walze und einem feststehenden Rakel, ist.

Mit den erfindungsgemäßen Verfahren sind alle vorbekannten und in der Literatur beschriebenen Komponenten von Klebemassen, Insbesondere selbstklebende, lösemittelfrei verarbeitbar, veranschaulicht, ohne sich durch die Wahl der abgebildeten Figuren unnötig beschränken zu wollen.

Es zeigen

Figur 1    das Verfahren mit zwei Mischaggregaten, wobei die Mikroballons erst im zweiten Mischaggregat zugesetzt werden,

Figur 2    das Verfahren mit zwei Mischaggregaten, wobei die Mikroballons im ersten Mischaggregat zugesetzt werden, sowie

Figur 3    das Verfahren mit einem Mischaggregat, wobei die Mikroballons direkt im ersten Mischaggregat zugesetzt werden.

In der Figur 3 ist ein besonders vorteilhaft gestaltetes Verfahren zur Herstellung eines geschäumten druckempfindlichen Selbstklebebandes gezeigt.

In einem kontinuierlichen Mischaggregat wie zum Beispiel einem Planetwalzenextruder (PWE) wird eine (Selbst-)Klebemasse hergestellt.

Dazu werden die Edukte E, die die Klebemasse bilden sollen, in den Planetwalzenextruder PWE 1 aufgegeben. Gleichzeitig werden die nicht expandierten Mikroballons MB während des Compoundierprozesses in die Selbstklebemasse homogen und unter Überdruck eingearbeitet.

Die erforderlichen Temperaturen zur homogenen Herstellung der Selbstklebemasse und zur Expansion der Mikroballons sind so aufeinander abgestimmt, dass die Mikroballons beim Austritt aus dem PWE 1 durch den Druckabfall bei Düsenaustritt in der Selbstklebemasse M aufschäumen und dabei die Masseoberfläche durchbrechen.

Mit einem Walzenauftragswerk 3 als Ausformaggregat wird diese schaumartige Klebemasse M kalandriert und auf ein bahnförmiges Trägermaterial wie zum Beispiel Trennpapier TP beschichtet, teilweise kann noch eine Nachschäumung im Walzenspalt stattfinden. Das Walzenauftragswerk 3 besteht aus einer Rakelwalze 31 und einer Beschichtungswalze 32. An die letztere wird das Trennpapier TP über eine Aufnahmewalze 33 geführt, so dass das Trennpapier TP die Klebemasse K von der Beschichtungswalze 32 übernimmt.

Gleichzeitig werden die expandierten Mikroballons MB wieder in die Polymermatrix der Klebemasse K gedrückt, und somit eine glatte und permanent (nicht reversibel) klebende Oberfläche bei sehr niedrigen Raumgewichten von bis zu 150 kg/m$^3$ erzeugt.

In der Figur 2 ist ein weiteres besonders vorteilhaft gestaltetes Verfahren zur Herstellung eines geschäumten druckempfindlichen Selbstklebebandes gezeigt.

Der Planetwalzenextruder PWE 1 weist zwei hintereinander geschaltete Mischzonen 11, 12 auf, in denen sich eine Zentralspindel dreht. Des Weiteren sind sechs Planetenspindeln je Heizzone vorhanden. In den Einspritzring 13 werden weitere Edukte zugegeben wie zum Beispiel Weichmacher oder flüssiges Harz.

Ein geeignetes Gerät ist beispielsweise der Planetwalzenextruder der Firma Entex in Bochum.

Anschließend werden die Mikroballons in einem zweiten Mischaggregat wie zum Beispiel einem Einschneckenextruder homogen in die Selbstklebemasse unter Überdruck eingearbeitet, oberhalb der Expansionstemperatur erhitzt und beim Austreten geschäumt. Dazu wird die aus den Edukten E gebildete Klebemasse K hier in den Einschneckenextruder ESE 2 aufgegeben, gleichzeitig werden die Mikroballons MB eingefüllt. Der Einschneckenextruder ESE weist über die Lauflänge 21 insgesamt vier Heizzonen auf.

Ein geeignetes Gerät ist beispielsweise ein Einschneckenextruder der Firma Kiener.

Die Mikroballons MB durchbrechen während der durch Druckabfall verursachten Expansion am Düsenaustritt des ESEs 2 die Masseoberfläche.

Mit einem Walzenauftragswerk 3 wird diese schaumartige Klebemasse M kalandriert und auf ein bahnförmiges Trägermaterial wie zum Beispiel Trennpapier TP beschichtet, teilweise kann noch eine Nachschäumung im Walzenspalt stattfinden. Das Walzenauftragswerk 3 besteht aus einer Rakelwalze 31 und einer Beschichtungswalze 32. An die letztere wird das Trennpapier TP über eine Aufnahmewalze 33 geführt, so dass das Trennpapier TP die Klebemasse K von der Beschichtungswalze 32 übernimmt. Gleichzeitig werden die expandierten Mikroballons MB wieder in die Polymermatrix der Klebemasse K gedrückt, und somit eine glatte und permanent (nicht reversibel) klebende Oberfläche bei sehr niedrigen Raumgewichten von bis zu 150 kg/m$^3$ erzeugt.

In der Figur 1 ist ein weiteres besonders vorteilhaft gestaltetes Verfahren zur Herstellung eines geschäumten druckempfindlichen Selbstklebebandes gezeigt.

In einem kontinuierlichen Mischaggregat wie zum Beispiel einem Planetwalzenextruder (PWE) wird eine (Selbst-)Klebemasse hergestellt.

Hier werden die Edukte E, die die Klebemasse bilden sollen, in den Planetwalzenextruder PWE 1 aufgegeben. Der Planetwalzenextruder PWE 1 weist zwei hintereinander geschaltete Mischzonen 11, 12 auf, in denen sich eine Zentralspindel dreht. Des Weiteren sind 6 Planetenspindeln je Heizzone vorhanden.

In den Einspritzring 13 werden weitere Edukte zugegeben wie zum Beispiel Weichmacher oder flüssiges Harz.

Ein geeignetes Gerät ist beispielsweise der Planetwalzenextruder der Firma Entex in Bochum.

Anschließend werden die Mikroballons in einem zweiten Mischaggregat wie zum Beispiel einem Einschneckenextruder homogen in die Selbstklebemasse unter Überdruck eingearbeitet, oberhalb der Expansionstemperatur erhitzt und beim Austreten geschäumt. Dazu wird die aus den Edukten E gebildete Klebemasse K hier in den Einschneckenextruder ESE 2 aufgegeben, gleichzeitig werden die Mikroballons MB eingefüllt. Der Einschneckenextruder ESE weist über die Lauflänge 21 insgesamt vier Heizzonen auf.

Ein geeignetes Gerät ist beispielsweise ein Einschneckenextruder der Firma Kiener.

Die Mikroballons MB durchbrechen während der durch Druckabfall verursachten Expansion am Düsenaustritt des ESEs 2 die Masseoberfläche.

Mit einem Walzenauftragswerk 3 wird diese schaumartige Klebemasse M kalandriert und auf ein bahnförmiges Trägermaterial wie zum Beispiel Trennpapier TP beschichtet, teilweise kann noch eine Nachschäumung im Walzenspalt stattfinden. Das Walzenauftragswerk 3 besteht aus einer Rakelwalze 31 und einer Beschichtungswalze 32. An die letztere wird das Trennpapier TP über eine Aufnahmewalze 33 geführt, so dass das Trennpapier TP die Klebemasse K von der Beschichtungswalze 32 übernimmt. Gleichzeitig werden die expandierten Mikroballons MB wieder in die Polymermatrix der Klebemasse K gedrückt, und somit eine glatte und permanent (nicht reversibel) klebende Oberfläche bei sehr niedrigen Raumgewichten von bis zu 150 kg/m$^3$ erzeugt.

Mit sinkendem Spaltdruck im Walzenspalt verringern sich die Verklebungsflächen der beschichteten, geschäumten Selbstklebemassen, da die Mikroballons dann weniger stark zurückgedrückt werden, wie der Figur 4 entnommen werden kann. Die Figur 4 zeigt die Verklebungsflächen in Abhängigkeit vom Beschichtungsverfahren beziehungsweise -parameter. Der benötigte Spaltdruck ist stark abhängig von dem verwendeten Massesystem, je höher die Viskosität, desto größer sollte der Spaltdruck sein, abhängig von der gewünschten Schichtdicke und der gewählten Beschichtungsgeschwindigkeit. In der Praxis hat sich ein Spaltdruck von größer 4 N/mm bewährt, unter besonders hohen Beschichtungsgeschwindigkeiten größer 50 m/min, bei niedrigen Masseaufträgen (Flächengewichten kleiner 70 g/m$^2$) und hochviskosen Massen (50.000 Pa*s bei 0,1 rad und 110 °C) können auch Spaltdrücke größer 50 N/mm benötigt werden.

Es hat sich bewährt, die Temperatur der Walzen der Expansionstemperatur der Mikroballons anzupassen. Idealerweise liegt die Walzentemperatur der ersten Walzen über der Expansionstemperatur der Mikroballons, um ein Nachschäumen der Mikroballons zu ermöglichen, ohne sie zu zerstören. Die letzte Walze sollte eine Temperatur gleich oder unter der Expansionstemperatur aufweisen, damit die Mikroballonhülle erstarren kann und sich die erfindungsgemäße, glatte Oberfläche ausbildet.

Viele Aggregate zur kontinuierlichen Herstellung und Verarbeitung von lösemittelfreien Polymersystemen sind bekannt. Zumeist finden Schneckenmaschinen wie Einschnecken- und Doppelschneckenextruder unterschiedlichster Verfahrenslänge und Bestückung Verwendung. Es werden aber auch kontinuierlich arbeitende Kneter verschiedenster Bauart, zum Beispiel auch Kombinationen aus Knetern und Schneckenmaschinen, oder auch Planetwalzenextruder für diese Aufgabe eingesetzt. Planetwalzenextruder sind seit längerer Zeit bekannt und fanden zuerst Einsatz in der Verarbeitung von Thermoplasten wie zum Beispiel PVC, wo sie hauptsächlich zum Beschicken der Folgeeinheiten wie zum Beispiel Kalander oder Walzwerke verwendet wurden. Durch ihren Vorteil der großen Oberflächenerneuerung für Material- und Wärmeaustausch, mit dem sich die über Friktion eingebrachte Energie rasch und effektiv abführen lässt, sowie der geringen Verweilzeit und des engen Verweilzeitspektrums hat sich ihr Einsatzgebiet in letzter Zeit unter anderem auch auf Compoundierprozesse erweitert, die eine besonders temperaturkontrollierte Fahrweise erfordern. Planetwalzenextruder gibt es je nach Hersteller in verschiedenen Ausführungen und Größen. Je nach gewünschter Durchsatzleistung liegen die Durchmesser der Walzenzylinder typischerweise zwischen 70 mm und 400 mm.

Planetwalzenextruder haben in der Regel einen Füllteil und einen Compoundierteil. Der Füllteil besteht aus einer Förderschnecke, auf die sämtliche Feststoffkomponenten kontinuierlich dosiert werden. Die Förderschnecke übergibt das Material dann dem Compoundierteil. Der Bereich des Füllteils mit der Schnecke ist vorzugsweise gekühlt, um Anbackungen von Materialien auf der Schnecke zu vermeiden. Es gibt aber auch Ausführungsformen ohne Schneckenteil, bei denen das Material direkt zwischen Zentral- und Planetenspindeln aufgegeben wird. Für die Wirksamkeit des erfindungsgemäßen Verfahrens ist dies aber nicht von Bedeutung.

Der Compoundierteil besteht aus einer angetriebenen Zentralspindel und mehreren Planetenspindeln, die innerhalb eines oder mehrer Walzenzylinder mit Innenschrägverzahnung um die Zentralspindel umlaufen. Die Drehzahl der Zentralspindel und damit die Umlaufgeschwindigkeit der Planetenspindeln kann variiert werden und ist damit ein wichtiger Parameter zur Steuerung des Compoundierprozesses.

Die Materialien werden zwischen Zentral- und Planetenspindeln beziehungsweise zwischen Planetenspindeln und Schrägverzahnung des Walzenteils umgewälzt, so dass unter Einfluss von Scherenergie und äußerer Temperierung die Dispergierung der Materialien zu einem homogenen Compound erfolgt.

Die Anzahl der in jedem Walzenzylinder umlaufenden Planetenspindeln kann variiert und somit den Erfordernissen des Prozesses angepasst werden. Die Spindelanzahl beeinflusst das freie Volumen innerhalb des Planetwalzenextruders, die Verweilzeit des Materials im Prozess und bestimmt zudem die Flächengröße für den Wärme- und Materialaustausch. Die Anzahl der Planetenspindeln hat über die eingeleitete Scherenergie Einfluss auf das Compoundierergebnis. Bei konstantem Walzenzylinderdurchmesser lässt sich mit größerer Spindelanzahl eine bessere Homogenisier- und Dispergierleistung beziehungsweise ein größerer Produktdurchsatz erzielen.

Die maximale Anzahl an Planetenspindeln, die sich zwischen Zentralspindel und Walzenzylinder einbauen lässt, ist abhängig vom Durchmesser des Walzenzylinders und vom Durchmesser der verwendeten Planetenspindeln. Bei Verwendung größerer Walzendurchmesser, wie sie zum Erzielen von Durchsatzraten im Produktionsmaßstab notwendig sind, beziehungsweise kleinerer Durchmesser für die Planetenspindeln können die Walzenzylinder mit einer größeren Anzahl an Planetenspindeln bestückt werden. Typischerweise werden bei einem Walzendurchmesser von D=70 mm bis zu sieben Planetenspindeln verwendet, während bei einem Walzendurchmesser von D=200 mm zum Beispiel zehn und bei einem Walzendurchmesser von D=400 mm beispielsweise 24 Planetenspindeln verwendet werden können.

Erfindungsgemäß wird vorgeschlagen, die Beschichtung der geschäumten Klebemassen lösungsmittelfrei mit einem Mehrwalzenauftragswerk durchzuführen. Dies können Auftragswerke bestehend aus mindestens zwei Walzen mit mindestens einem Walzenspalt bis zu fünf Walzen mit drei Walzenspalten sein.

Denkbar sind auch Beschichtungswerke wie Kalander (I,F,L-Kalander), so dass die geschäumte Klebemasse beim Durchgang durch einen oder mehrere Walzenspalte auf die gewünschte Dicke ausgeformt wird.

Als besonders vorteilhaft hat sich dabei erwiesen, die Temperaturführung der einzelnen Walzen so zu wählen, dass gegebenenfalls eine kontrollierte Nachschäumung stattfinden kann, in der Weise, dass übergebende Walzen eine Temperatur oberhalb oder gleich der Schäumungstemperatur der gewählten Mikroballon-Type aufweisen können, während abnehmende Walzen eine Temperatur unterhalb oder gleich der Schäumungstemperatur haben sollten um eine unkontrollierte Schäumung zu verhindern und wobei alle Walzen einzeln auf Temperaturen von 30 bis 220 °C eingestellt werden können.

Um das Übergabeverhalten der ausgeformten Masseschicht von einer auf eine andere Walze zu verbessern, können weiterhin antiadhäsiv ausgerüstete Walzen oder Rasterwalzen zum Einsatz kommen. Um einen hinreichend präzise ausgeformten Klebstofffilm zu erzeugen können die Umfangsgeschwindigkeiten der Walzen Differenzen aufweisen.

Das bevorzugte 4-Walzenauftragswerk wird gebildet von einer Dosierwalze, einer Rakelwalze, die die Dicke der Schicht auf dem Trägermaterial bestimmt und die parallel zur Dosierwalze angeordnet ist, und einer Übertragungswalze, die sich unterhalb der Dosierwalze befindet. Auf der Auflegewalze, die zusammen mit der Übertragungswalze einen zweiten Walzenspalt bildet, werden die Masse und das bahnförmige Material zusammengeführt.

Je nach Art des zu beschichtenden bahnförmigen Trägermaterials kann die Beschichtung im Gleichlauf- oder Gegenlaufverfahren erfolgen.

Das Ausformaggregat kann auch durch einen Spalt gebildet werden, der sich zwischen einer Walze und einem feststehenden Rakel ergibt. Das feststehende Rakel kann ein Messerrakel sein oder eine feststehende (Halb-)Walze.

Mit den erfindungsgemäß beschriebenen Verfahren lassen sich selbstklebende Produkte erzeugen, welche zum einen die Vorteile einer mit Mikroballons geschäumten Selbstklebemasse in sich vereinen, zum anderen aber nicht den typischen Klebkraftabfall im Verhältnis zum ungeschäumten Produkt aufweisen. Völlig überraschend und für den Fachmann nicht vorhersehbar lassen sich mit diesem Verfahren auch selbstklebende Produkte erzeugen, wenn die Schichtdicke der geschäumten Selbstklebemasse im Bereich des Durchmessers der expandierten Mikroballons liegt. Ebenso überraschend ist, dass es möglich ist, Produkte mit einem so niedrigen Raumgewicht zu erzeugen, dass bedingt durch den Durchmesser der Mikroballons die theoretisch dichteste Kugelpackung überschritten wird.

In einer theoretisch dichtesten Kugelpackung hat jede Kugel 12 nächste Nachbarn, sechs in der eigenen Schicht sowie drei je darüber und darunter. Sie bilden bei der kubischen Packung einen Kuboktaeder, bei der hexagonalen einen Antikuboktaeder.

Der Raumfüllungsgrad einer theoretisch dichtesten Kugelpackung beträgt

$$\frac{\Pi}{3\sqrt{2}} \approx 0{,}74048 \approx 74\%$$

Da die Mikroballons in der Klebemasse bei einem hohen Füllungsgrad nicht als Kugeln vorliegen, sondern irreversibel zu dreidimensionalen Polyedern verformt werden, ist es möglich, dass der Raumfüllungsgrad der expandierten Mikroballons in der Klebemasse oberhalb von 74 % liegt.

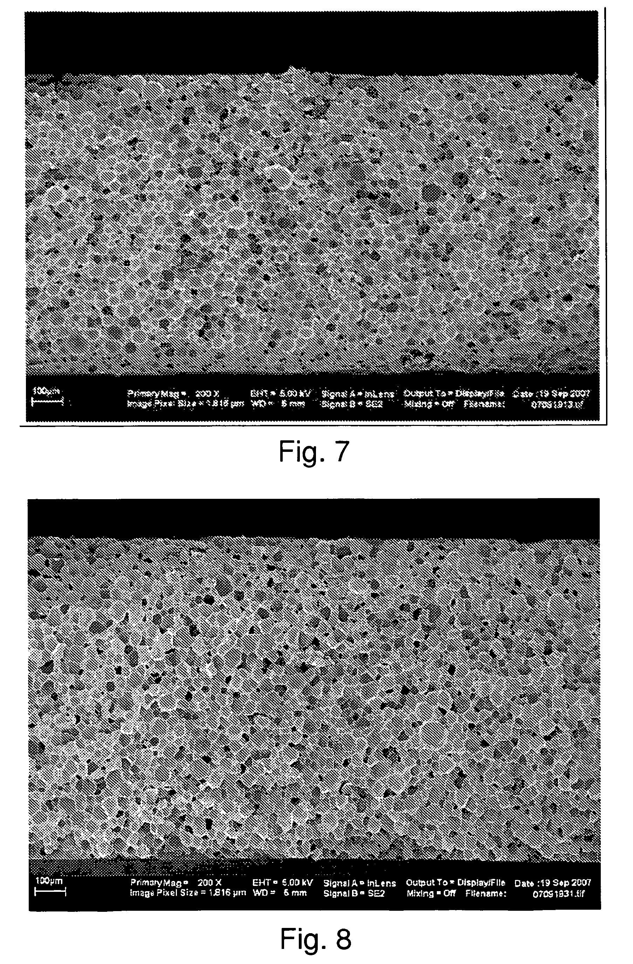

Dies zeigen sehr anschaulich die Figuren 7 und 8. In der Figur 7 ist eine Klebemasse gezeigt mit einem Mikroballongehalt von 8 Gew.-%, was zu einem Raumgewicht der Klebemasse von 338 kg/m$^3$ führt. Figur 8 zeigt eine Klebemasse mit einem Mikroballongehalt von 22 Gew.% und einem Raumgewicht 137 kg/m$^3$.

Wie deutlich gezeigt ist, liegt der Füllungsgrad aufgrund der gut zu erkennenden Verformung der expandierten Mikroballons oberhalb der theoretisch dichtest möglichen Kugelpackung. Die Mikroballons weisen eine polyederförmige Form auf und sind nicht mehr kugelförmig.

Die Neuheit der erfindungsgemäßen Verfahren und damit auch der Klebemasse besteht darin, dass die expandierten Mikroballons während der Ausformung zu einer Schicht, insbesondere unmittelbar vor dem Beschichtungsvorgang in die Polymermatrix der Klebemasse zurückgedrückt werden, und somit eine glatte, permanent klebende Masseoberfläche durch das Ausformaggregat, insbesondere Walzenauftragswerk ausgeformt wird.

Es können geschäumte, stark klebende Selbstklebebänder in einem Schichtdickenbereich von 20 bis 3000 μm bei hohen Mikroballongehalten und somit hohen Schäumungsraten beziehungsweise niedrigen Raumgewichten hergestellt werden.

Der Nutzen von geschäumten Klebemassen liegt einerseits in der Kostenreduktion. Es können Rohstoffe eingespart werden, da Masseaufträge bei gleichen Schichtdicken um ein Vielfaches verringert werden können. Zusätzlich können die Beschichtungsgeschwindigkeiten bei gleichem Durchsatz oder Mengenherstellung von Klebemasse erhöht werden.

Weiterhin ergeben sich durch die Schäumung der Klebemasse verbesserte klebtechnische und anwendungstechnische Eigenschaften.

Diese Verringerung des Klebkraftabfalls wird durch die hohe Oberflächengüte, welche durch das Zurückdrücken der expandierten Mikroballons in die Polymermatrix während des Beschichtungsvorgangs erzeugt wird, begünstigt.

Außerdem gewinnt die geschäumte Selbstklebemasse gegenüber der ungeschäumten Masse gleicher Polymerbasis zusätzliche Leistungsmerkmale, wie zum Beispiel eine verbesserte Schlagbeständigkeit bei Tieftemperaturen, gesteigerte Klebkraft auf rauen Untergründen, größere Dämpfungs- und/oder Abdichteigenschaften beziehungsweise Anschmiegsamkeit der Schaumklebemasse auf unebenen Untergründen, ein günstigeres Stauch-/Härteverhalten und verbessertes Kompressionsvermögen.

Die nähere Erläuterung der charakteristischen Eigenschaften beziehungsweise Zusatzfunktionen der erfindungsgemäßen Selbstklebemassen erfolgt teilweise in den Beispielen.

Eine geschäumte Klebemasse aus der bevorzugten Hotmeltklebemasse hat eine glatte klebende Oberfläche, da die expandierten Mikroballons während der Beschichtung im Walzenspalt nachträglich wieder in die Polymermatrix gedrückt werden, und weist folglich eine bevorzugte Oberflächenrauigkeit $R_a$ kleiner 10 $\mu$m auf. Die Bestimmung der Oberflächenrauigkeit eignet sich nur für Klebebänder, welche auf einem sehr glatten Träger basieren und selbst nur eine Oberflächenrauigkeit von $R_a$ kleiner 1 $\mu$m aufweisen. Bei in der Praxis relevanten Trägern, wie zum Beispiel gekreppten Papieren oder Vliesen und Geweben mit einer größeren Oberflächenrauigkeit eignet sich die Bestimmung der Oberflächenrauigkeit des Produktes demgemäß nicht zur Beschreibung der Verfahrensvorteile.

Der Anteil der Mikroballons in der Klebemasse liegt gemäß einer bevorzugten Ausführungsform der Erfindung zwischen größer 0 Gew.-% und 30 Gew.-%, insbesondere zwischen 1,5 Gew.-% und 10 Gew.-%.

Weiter vorzugsweise weisen die Mikroballons bei 25 °C einen Durchmesser von 3 $\mu$m bis 40 $\mu$m, insbesondere 5 $\mu$m bis 20 $\mu$m, und/oder nach Temperatureinwirkung einen Durchmesser von 20 $\mu$m bis 200 $\mu$m, insbesondere 40 $\mu$m bis 100 $\mu$m, auf.

In allen bisher bekannten Verfahren zur Herstellung von mit Mikroballons geschäumten Klebemassesystemen bildet sich eine raue, nur wenig oder nicht klebende Oberfläche der Klebemasse aus.

Schon ab einem geringen Mikroballongehalt von 0,5 Gew.-% lassen sich bei einer Selbstklebemasse, die aus Lösungsmittel beschichtet ist, Klebkraft(Schälkraft)verluste größer 40 % erzielen. Mit steigendem Mikroballongehalt sinken die Klebkräfte noch weiter und die Kohäsion erhöht sich.

Bereits bei einem Anteil von nur 1 Gew.-% Mikroballons ist die Adhäsion der Klebemasse sehr gering.

Dies untermauern die Vergleichsbeispiele Nr.1.1 und 1.2 beziehungsweise Tabelle 3.

Das Verhältnis des Raumgewichts der durch die Mikroballons geschäumten Klebemasse zum Raumgewicht der flächengewichts- und rezepturidentischen Klebemasse, die durch die Zerstörung der durch die expandierten Mikroballons entstandenen Hohlräume entschäumt ist, ist bevorzugt kleiner 0,8.

Dieses Verhalten zeigt sich auch bei lösungsmittelfreier Düsenbeschichtung, wobei die Mikroballons nach Austritt aus dem Extruder/ Düse bei Druckausgleich aufschäumen und die Klebmassenmatrix durchbrechen.

Innerhalb des Erfindungsgedankens liegt auch eine Klebemasse, insbesondere Selbstklebemasse, erhalten nach dem erfindungsgemäßen Verfahren.

Des Weiteren ist vom Erfindungsgedanken auch ein Selbstklebeband umfasst, das unter Zuhilfenahme der Klebemasse hergestellt wird, indem auf ein bahnförmiges Material zumindest einseitig die Klebemasse aufgetragen wird. In einem doppelseitig klebend ausgerüsteten Klebeband können beide Klebebeschichtungen erfindungsgemäß sein. Alternativ ist vorgesehen, dass nur eine der beiden Beschichtungen erfindungsgemäß ist, während die zweite beliebig wählbar ist (angepasst an die zu erfüllenden Aufgaben des Klebebands).

Bevorzugt wird als Trägermaterial eine Folie, ein Gewebe oder ein Papier, auf das einseitig die (Selbst-)Klebemasse aufgebracht wird.

Weiterhin wird bevorzugt die (Selbst-)Klebemasse auf einem Trennpapier oder einer Trennfolie aufgebracht, woraus ein trägerloses Klebeband resultiert, auch kurz Fix genannt.

Die Dicke der Klebemasse in einem Klebeband auf dem bahnförmigen Trägermaterial kann zwischen 20 $\mu$m und 3000 $\mu$m betragen, vorzugsweise zwischen 40 $\mu$m und 150 $\mu$m.

Des Weiteren kann die Klebemasse in einer Dicke von 20 $\mu$m bis 2000 $\mu$m auf einem Releasematerial aufgetragen sein, wenn die Klebmassenschicht, insbesondere nach Vernetzung, als trägerloses doppelseitig klebendes Selbstklebeband eingesetzt werden soll.

Bei Mikroballons handelt es sich um elastische Hohlkugeln, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind. Durch ein Einwirken auf die Mikroballons, insbesondere durch eine Wärmeeinwirkung erweicht einerseits die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich wie zum Beispiel von der Firma Akzo Nobel die Expancel DU-Typen (dry unexpanded), welche sich im Wesentlichen über ihre Größe (6 bis 45 $\mu$m Durchmesser im unexpandierten Zustand) und ihre zur Expansion benötigten Starttemperatur (75 bis 220 °C) differenzieren. Wenn der Mikroballontyp beziehungsweise die Schäumungstemperatur auf das zur Massecompoundierung benötigte Temperaturprofil und die Maschinenparameter abgestimmt ist, können Massecompoundierung und Schäumung auch gleichzeitig in einem Schritt erfolgen.

Weiterhin sind unexpandierte Mikroballontypen auch als wässrige Dispersion mit einem Feststoff- beziehungsweise Mikroballonanteil von ca. 40 bis 45 Gew.-% erhältlich, weiterhin auch als polymergebundende Mikroballons (Masterbatche), zum Beispiel in Ethylen-Vinylacetat mit einer Mikroballonkonzentration von ca. 65 Gew.-%. Sowohl die Mikroballon-Dispersionen als auch die Masterbatche sind wie die DU-Typen zur Schäumung von Klebemassen entsprechend des erfindungsgemäßen Verfahrens geeignet.

Die Auswahl einer geeigneten Klebemassebasis zur Ausübung des erfindungsgemäßen Verfahrens ist unkritisch. Sie kann aus der Gruppe der thermoplastischen Elastomere beinhaltend Natur- und Synthesekautschuke einschließlich Blockcopolymere und deren Blends gewählt sein aber ebenso aus der Gruppe der so genannten Polyacrylatklebemassen.

Vorteilhafterweise ist die Basis für die kautschukbasierenden Klebemassen ein nichtthermoplastisches Elastomer gewählt aus der Gruppe der Naturkautschuke oder der Synthesekautschuke oder besteht aus einem beliebigen Blend aus Naturkautschuken und/oder Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können thermoplastische Elastomere als Basis für die Klebemasse gewählt werden.

Stellvertretend genannt seien an dieser Stelle die Styrolblockcopolymere und vor allem die Styrol-Isopren-Styrol (SIS)- und Styrol-Butadien-Styrol (SBS)-Typen.

Weiterhin vorzugsweise kann die Klebemasse auch aus der Gruppe der Polyacrylate gewählt sein.

Als klebrigmachende Harze sind ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen. Auf die Darstellung des Wissensstandes im "Handbook of Pressure Sensitive Adhesive Technology" von Donatas Satas (van Nostrand, 1989) sei ausdrücklich hingewiesen.

Als Weichmacher können alle aus der Klebebandtechnologie bekannten weichmachenden Substanzen eingesetzt werden. Dazu zählen unter anderem die paraffinischen und naphthenischen Öle, (funktionalisierte) Oligomere wie Oligobutadiene, -isoprene, flüssige Nitrilkautschuke, flüssige Terpenharze, pflanzliche und tierische Öle und Fette, Phthalate, funktionalisierte Acrylate.

Zum Zwecke der thermisch induzierten chemischen Vernetzung sind bei dem erfindungsgemäßen Verfahren alle vorbekannten thermisch aktivierbaren chemischen Vernetzer wie beschleunigte Schwefel- oder Schwefelspendersysteme, Isocyanatsysteme, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.

Die Vernetzer werden vorzugsweise aktiviert bei Temperaturen über 50 °C, insbesondere bei Temperaturen von 100 °C bis 160 °C, ganz besonders bevorzugt bei Temperaturen von 110 °C bis 140 °C.

Die thermische Anregung der Vernetzer kann auch durch IR-Strahlen oder hochenergetische Wechselfelder erfolgen.

Als Trägermaterial für das ein- oder doppelseitig klebende Klebeband können alle bekannten textilen Träger wie eine Schlingenware, ein Velour, ein Gelege, ein Gewebe, ein Gewirke, insbesondere ein PET-Filamentgewebe oder ein Polyamid-Gewebe, oder ein Vlies eingesetzt werden, wobei unter "Vlies" zumindest textile Flächengebilde gemäß EN 29092 (1988) sowie Nähwirkvliese und ähnliche Systeme zu verstehen sind. Ebenfalls können Abstandsgewebe und -gewirke mit Kaschierung verwendet werden. Abstandsgewebe sind mattenförmige Schichtkörper mit einer Deckschicht aus einem Faser- oder Filamentvlies, einer Unterlagsschicht und zwischen diesen Schichten vorhandene einzelne oder Büschel von Haltefasern, die über die Fläche des Schichtkörpers verteilt durch die Partikelschicht hindurchgenadelt sind und die Deckschicht und die Unterlagsschicht untereinander verbinden. Die durch die Partikelschicht hindurchgenadelten Haltefasern halten die Deckschicht und die Unterlagsschicht in einem Abstand voneinander und sie sind mit der Deckschicht und der Unterlagsschicht verbunden.

Als Vliesstoffe kommen besonders verfestigte Stapelfaservliese, jedoch auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozessführung ausschließlich oder zumindest überwiegend auf Faserknotenpunkte beschränken, so dass unter Erhalt der lockeren, offenen Struktur im Vlies trotzdem ein stabiles, dreidimensionales Netzwerk gebildet wird.

Besonders vorteilhaft haben sich Vliese erwiesen, die insbesondere durch ein Übernähen mit separaten Fäden oder durch ein Vermaschen verfestigt sind.

Derartige verfestigte Vliese werden beispielsweise auf Nähwirkmaschinen des Typs "Malivlies" der Firma Karl Mayer, ehemals Malimo, hergestellt und sind unter anderem bei den Firmen Naue Fasertechnik und Techtex GmbH beziehbar. Ein Malivlies ist dadurch gekennzeichnet, dass ein Querfaservlies durch die Bildung von Maschen aus Fasern des Vlieses verfestigt wird.

Als Träger kann weiterhin ein Vlies vom Typ Kunitvlies oder Multiknitvlies verwendet werden. Ein Kunitvlies ist dadurch gekennzeichnet, dass es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Kunitvlies" der Firma Karl Mayer schon seit längerer Zeit hergestellt. Ein weiteres kennzeichnendes Merkmal dieses Vlieses besteht darin, dass es als Längsfaservlies in Längsrichtung hohe Zugkräfte aufnehmen kann. Ein Multiknitvlies ist gegenüber dem Kunitvlies dadurch gekennzeichnet, dass das Vlies durch das beidseitige Durchstechen mit Nadeln sowohl auf der Ober- als auch auf der Unterseite eine Verfestigung erfährt.

Schließlich sind auch Nähvliese als Vorprodukt geeignet, ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Maliwatt" der Firma Karl Mayer, ehemals Malimo, bekannt. Sodann ist das Caliweb® hervorragend geeignet. Das Caliweb® besteht aus einem thermisch fixierten Abstandsvliesstoff Multiknit mit zwei außenliegenden Maschenschichten und einer innenliegenden Polschicht, die senkrecht zu den Maschenschichten angeordnet ist.

Weiterhin besonders vorteilhaft ist ein Stapelfaservlies, das im ersten Schritt durch mechanische Bearbeitung vorverfestigt wird oder das ein Nassvlies ist, das hydrodynamisch gelegt wurde, wobei zwischen 2 % und 50 % der Fasern des Vlieses Schmelzfasern sind, insbesondere zwischen 5 % und 40 % der Fasern des Vlieses.

Ein derartiges Vlies ist dadurch gekennzeichnet, dass die Fasern nass gelegt werden oder zum Beispiel ein Stapelfaservlies durch die Bildung von Maschen aus Fasern des Vlieses oder durch Nadelung, Vernähung beziehungsweise Luft- und/oder Wasserstrahlbearbeitung vorverfestigt wird.

In einem zweiten Schritt erfolgt die Thermofixierung, wobei die Festigkeit des Vlieses durch das Auf- oder Anschmelzen der Schmelzfasern nochmals erhöht wird.

Die Verfestigung des Vliesträgers lässt sich auch ohne Bindemittel beispielsweise durch Heißprägen mit strukturierten Walzen erreichen, wobei über Druck, Temperatur, Verweilzeit und die Prägegeometrie Eigenschaften wie Festigkeit, Dicke, Dichte, Flexibilität u.ä. gesteuert werden können.

Als Ausgangsmaterialien für die textilen Träger sind insbesondere Polyester-, Polypropylen-, Viskose- oder Baumwollfasern vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Vlieses eingesetzt werden. Insbesondere verschleißfeste Polymere wie Polyester, Polyolefine, Polyamide oder Glas- oder Carbonfasern Verwendung.

Als Trägermaterial eignen sich auch Träger aus Papier (gekreppt und/oder ungekreppt), aus einem Laminat, aus einer Folie (zum Beispiel Polyethylen-, Polypropylen-, mono- oder biaxial orientierte Polypropylenfolien, Polyester-, PA-, PVC- und andere Folien), oder aus bahnförmigen Schaumstoffen (beispielsweise aus Polyethylen und Polyurethan).

Auf der Streichseite können die Oberflächen der Träger chemisch oder physikalisch vorbehandelt sein, sowie die Rückseite derselben einer antiadhäsiven physikalischen Behandlung oder Beschichtung unterzogen sein.

Schließlich kann das bahnförmige Trägermaterial ein beidseitig antiadhäsiv beschichtetes Material sein wie ein Trennpapier oder eine Trennfolie, auch Liner genannt.

Folgende Prüfmethoden werden angewandt, um auch in den Beispielen die angegeben Messwerte zu bestimmen.

**Prüfmethoden**

**Bestimmung der Oberflächenrauheit**

Das PRIMOS System besteht aus einer Beleuchtungseinheit und einer Aufnahmeeinheit. Die Beleuchtungseinheit projiziert mit Hilfe eines digitalen Mikro-Spiegel-Projektors Linien auf die Oberfläche. Diese projizierten, parallelen Linien werden durch die Oberflächenstruktur abgelenkt beziehungsweise moduliert.

Für die Registrierung der modulierten Linien wird eine, in einem bestimmten Winkel, dem so genannten Triangulationswinkel, angeordnete CCD- Kamera eingesetzt.

| | |
|---|---|
| Messfeldgröße: | 14,5x23,4 MM$^2$ |
| Profillänge: | 20,0 mm |
| Flächenrauheit: | 1,0 mm vom Rand entfernt (Xm = 21,4mm; Ym = 12,5mm) |
| Filterung: | Polynomfilter 3. Ordnung |

Zu beziehen sind entsprechende Messgeräte unter anderem bei der GFMesstechnik GmbH in Teltow.

**Schälfestigkeit (Klebkraft)**

Die Prüfung der Schälfestigkeit (Klebkraft) erfolgt in Anlehnung an PSTC-1.

Ein Streifen des zu untersuchenden (Selbst)klebebandes wird in definierter Breite (Standard: 20 mm) auf einer geschliffenen Stahlplatte beziehungsweise auf einem anderen gewünschten Haft-/Prüfuntergrund wie zum Beispiel Polyethylen oder Polycarbonat usw. durch zehnmaliges Überrollen mittels einer 5 kg Stahlrolle verklebt. Doppelseitig klebende Klebebänder werden mit einer 36 μm dicken Hart-PVC-Folie rückseitig verstärkt. Die so präparierte Platte wird in das Prüfgerät eingespannt, der Klebestreifen über sein freies Ende an einer Zugprüfmaschine unter einem Schälwinkel von 180° mit einer Geschwindigkeit von 300 mm/min abgezogen, und die dafür notwendige Kraft ermittelt. Die Messergebnisse sind in N/cm angegeben und über drei Messungen gemittelt. Alle Messungen werden in einem klimatisierten Raum bei 23 °C und 50 % relativer Luftfeuchte durchgeführt.

**Quantitative Ermittlung der Scherfestigkeit: Statischer Schertest SSZ**

Ein Klebeband wird auf einen vorgegebenen, starren Haftuntergrund (hier Stahl) aufgebracht und einer konstanten Scherbelastung ausgesetzt. Ermittelt wird die Haltedauer in Minuten.

Durch eine geeignete Plattenaufhängung (Winkel 179 ± 1 °) wird sichergestellt, dass sich das Klebeband nicht von der Unterkante der Platte abschält.

In erster Linie soll die Prüfung eine Aussage über die Kohäsivität der Masse liefern. Dies ist aber nur dann der Fall, wenn die Parameter Gewicht und Temperatur so gewählt werden, dass es bei der Prüfung tatsächlich zu Kohäsionsversagen kommt.

Ansonsten gibt der Test Aufschluss über die Adhäsion zum Haftgrund oder über eine Kombination aus Adhäsion und Kohäsivität der Masse.

Ein 13 mm breiter Streifen des zu prüfenden Klebebandes wird auf einem polierten Stahlplättchen (Prüfuntergrund) auf einer Länge von 5 cm mit einer 2 kg-Rolle durch 10 maliges Überrollen verklebt. Doppelseitig klebende Klebebänder werden auf der Rückseite mit einer 50 μm starken Aluminiumfolie abgedeckt und somit verstärkt. Anschließend wird eine Gurtschlaufe an das untere Ende des Klebebandes angebracht. Sodann wird mit Schraube und Mutter ein Adapterplättchen auf der Vorderseite der Schertestplatte befestigt, um den vorgegebenen Winkel von 179 ± 1 ° zu gewährleisten. Die Aufziehzeit zwischen Anrollen und Belastung soll zwischen 10 und 15 Minuten liegen. Die Gewichte werden anschließend ruckfrei mit Hilfe der Gurtschlaufe angehängt.

Eine automatische Zähleruhr ermittelt nun den Zeitpunkt des Abscherens der Prüfmuster.

**Quantitative Ermittlung der Scherdeformation: Mikroscherweg MSW**

Ein 1 cm breiter Streifen des Klebebandes wird auf einem polierten Stahlplättchen (Prüfuntergrund) auf einer Länge von 5 cm mit einer 2 kg-Rolle durch zehnmaliges Überrollen verklebt. Doppelseitig klebende Klebebänder werden auf der Rückseite mit einer 50 μm starken Aluminiumfolie abgedeckt. Der Teststreifen wird mit einer 190 μm dicken PET-Folie verstärkt und anschließend kantengerade mit Hilfe einer Fixiervorrichtung abgeschnitten. Dabei steht die Kante des verstärkten Teststreifens 1 mm über der Kante des Stahlplättchens. Die Plättchen werden für 15 min unter Testbedingungen (23 °C, 50% relative Luftfeuchte) im Messgerät aber ohne Last equilibriert. Anschließend wird das gewünschte Testgewicht (hier 50 g) angehängt, so dass eine Scherbeanspruchung parallel zur Verklebungsfläche entsteht. Mittels eines Wegaufnehmers mit einer Auflösung im $\mu$m-Bereich wird in Abhängigkeit der Zeit der Scherweg graphisch aufgenommen.

Als Mikroscherweg $\mu$S1 wird der Scherweg (Scherstrecke) nach einer Gewichtsbelastung definierter Dauer (hier: 10 min) angegeben.

## Kälteschlagbeständigkeit von doppelseitig klebenden Haftklebebändern

Mit dem Test der Kälteschlagbeständigkeit (Cold Shock Resistance) soll die Empfindlichkeit von doppelseitig klebenden (d/s) Haftklebebändern gegenüber plötzlicher, dynamischer Schlagbeanspruchung geprüft werden. Mit dem zu prüfenden Klebeband wird ein Prüfkörper aus einer PC-Platte und einem ABS-Rahmen hergestellt. Das zu prüfende doppelseitig klebende Klebeband wird zwischen diese beiden Fügeteile geklebt und anschließend mit einem 6kg-Gewicht für 5 Sekunden belastet.

Der so hergestellte Prüfkörper wird bei der zu prüfenden Temperatur für mindestens 5 Stunden gelagert. Anschließend werden die gekühlten Prüfkörper hochkant aus einer Höhe von 1,5 m auf einen definierten Untergrund (Aluminiumplatte) fallen gelassen. Dieser Vorgang wird dreimal wiederholt.

Es erfolgt eine qualitative Auswertung durch Lagerung bei unterschiedlichen Temperaturen bis alle verklebten Prüfmuster den Test/ Aufprall ohne Abplatzen o.ä. bestehen.

## Raumgewicht/ Dichte

Das Raumgewicht beziehungsweise die Dichte einer beschichteten Selbstklebemasse wird über das Verhältnis vom Flächengewicht zu der jeweiligen Schichtdicke bestimmt:

$$\delta = \frac{m}{V} = \frac{MA}{d} \qquad [\delta] = \frac{[kg]}{[m^2] \cdot [m]} = \left[\frac{kg}{m^3}\right]$$

MA = Masseauftrag/Flächengewicht (ohne Trägergewicht) in [kg/m$^2$]
d = Schichtdicke (ohne Trägerdicke) in [m]

Im Folgenden wird anhand von Vergleichsbeispielen sowie anhand von Beispielen die Erfindung näher erläutert, ohne dass damit eine Einschränkung des Erfindungsgegenstands gewollt ist.

Die nachstehenden Vergleichsbeispiele 1.1. und 1.2. weisen die Vorteile der Schäumung einer Selbstklebemasse nach dem erfindungsgemäßen Hotmelt-Verfahren gegenüber der Schäumung aus Lösungsmittel auf.

Die aus dem erfindungsgemäßen Verfahren resultierenden Vorteile können an einem fertigen, geschäumten Selbstklebeband auf einfachste Weise nachgewiesen werden, wie es im zusätzlichen Vergleichsbeispiel 2 aufgezeigt wird.

Der Kürze halber wird in den Beispielen der Begriff "Hotmelt" mit dem Begriff "Hotmeltverfahren", das sich als ein erfindungsgemäßes Verfahren darstellt, gleichgesetzt.

## Eingesetzte Rohstoffe:

In den anschließenden Beispielen wurden folgende Rohstoffe verwendet:

Tabelle 1: Eingesetzte Rohstoffe

| Handelsname | Rohstoff/ IUPAC | Hersteller/ Lieferant |
|---|---|---|
| Kautschuk SVR 3L | Naturkautschuk (NR) | Kautschukgesellschaft mbH |
| Kraton D-1118 | Styrol-Butadien-Styrol Blockcopolymer (SBS) | Kraton Polymers |
| Kraton D-1102 CS | Styrol-Butadien-Styrol Blockcopolymer | Kraton Polymers |
| Europrene SOL T 9113 | Styrol-Isopren-Styrol Blockcopolymer (SIS) | EniChem Deutschland GmbH |
| Vector 4113 | Styrol-Isopren-Styrol Blockcopolymer | Exxon Mobil Chemical Central Europe GmbH |

(fortgesetzt)

| Handelsname | Rohstoff/ IUPAC | Hersteller/ Lieferant |
|---|---|---|
| Kraton D-1165 | Styrol-Isopren-Styrol Blockcopolymer | Kraton Polymers |
| Taipol SBS 3202 | Styrol-Butadien-Styrol Blockcopolymer | Taiwan Synthetic Rubber Corp. |
| Regalite R 1125 | Kohlenwasserstoffharz | Eastman Chemical |
| Dercolyte A 115 | Poly-$\alpha$-Pinenharz | DRT (Willers & Engel) |
| Piccotac 1100-E | aliphatische Kohlenwasserstoffharz | Eastman Chemical Middelburg B.V. |
| Pentalyn H-E | Pentaerithrit-Ester von Kolophonium | Eastman Chemical Middelburg B.V. |
| Dertophene T 110 | Terpenphenolharz | DRT (Willers & Engel) |
| Ondina G41 | Mineralöl | Deutsche Shell AG |
| Mikrosöhl 40 | Calciumcarbonat | Vereinigte Kreidewerke Dammann |
| Zinkoxid | Zinkoxid | Werner & Heubach |
| Irganox 1726 | 2,4-Bis(dodecylthiomethyl)-6-methylphenol | CIBA GEIGY |
| Irganox 1076 | Octadecyl-3-(3,5-di-tert.butyl-4-hydroxyphenyl)-propionat | CIBA GEIGY |
| n-Butylacrylat | Acrylsäure-n-Butylester | Rohm & Haas |
| Acrylsäure rein | Acrylsäure | BASF |
| N-tert.Butylacrylamid | N-(1,1-dimethylethyl)-2-propenamid | Linz Chemie |
| 2-Ethylhexylacrylat | 2-Ethylhexylacrylat | Brenntag |
| Bisomer HEMA | 2-Hydroxyethylmethacrylat | IMCD Deutschland |
| Methylacrylat | Acrylsäure-Methylester | BASF |
| Maleinsäureanhydrid | 2,5-Dihydro-2,5-furan-dion, MSA | Condea-Huntsman |
| Expancel 051 DU 40 | Mikroballons (MB) | Expancel Nobel Industries |

**Vergleichsbeispiel 1.1.**

Am Beispiel von Lösungsmittelmassen auf Basis von Naturkautschuk zeigt sich, dass sich bereits bei einem Anteil von nur 1 Gew.-% Mikroballons die Adhäsion der Klebemasse sehr stark verringert.

Die Lösungsmittelmassen auf Basis von NR weisen folgende Rezepturen auf:

Tabelle 2: NR-Rezepturen aus Lösungsmittel

| | Rezeptur A | B | C | D | E | |
|---|---|---|---|---|---|---|
| **Kautschuk SVR** | 50,0 | 49,75 | 49,5 | 49,25 | 49,0 | **Lösungsmittel** |
| **Dertophene T110** | 50,0 | 49,75 | 49,5 | 49,25 | 49,0 | |
| **Expancel 051 DU 40** | 0,0 | 0,5 | 1,0 | 1,5 | 2,0 | |

Der Feststoffgehalt der Masse in Benzin beträgt 40 Gew.-%.

Es wurden 5 Lösungsmittelmassen nach oben stehenden Rezepturen mit unterschiedlichen Mikroballongehalten in einem Z-Kneter hergestellt.

Diese Klebemassen werden auf eine 23 $\mu$m dicke PET-Folie mit einem Rakel aufgebracht, und zwar mit konstantem Masseauftrag von 50 g/m$^2$ fest.

Die ausgestrichenen Lappenmuster werden anfangs für 15 Minuten in einem Abzug gelagert, um den Großteil des verwendeten Lösungsmittels abdampfen zu lassen und im Anschluss werden die Muster für 15 Minuten bei 70 °C bis zur Massenkonstanz getrocknet.

Die mit expandierbaren Mikroballons versetzten Muster werden außerdem einem Temperatureintrag über fünf Minuten bei 130 °C im Trockenschrank ausgesetzt, um die Schäumung der Selbstklebemasse zu initiieren.

In Tabelle 3 ist gezeigt, wie die klebtechnischen Eigenschaften der Klebemasse mit zunehmendem Anteil an Mikroballons beeinflusst werden.

Tabelle 3: klebtechnische Eigenschaften einer Naturkautschukmasse aus Lösung

| | | Mikroballongehalt [%] | Dichte [kg/m³] | Klebkraft auf Stahl [N/cm] | Klebkraft-Verlust [%] | Mikroscherweg 10min Belastung 50g [μm] |
|---|---|---|---|---|---|---|
| Lösungsmittel | Rezeptur A | 0 | 990 | 4,9 | 0 | 1100 |
| | B | 0,5 | 670 | 2,9 | 40,8 | 400 |
| | C | 1,0 | 540 | 2,4 | 51,0 | 200 |
| | D | 1,5 | 470 | 1,1 | 77,6 | ----- |
| | E | 2,0 | 400 | 0,3 | 93,9 | ----- |

Im Gegensatz zur Verklebungskraft wird die Kohäsion der Selbstklebemasse durch die Schäumung derselben wesentlich verbessert.

Ein geschäumtes Muster hat unter gleichen Temperaturbedingungen und gleicher Belastung einen geringeren bis keinen Scherweg nach 10 Minuten zurückgelegt (siehe "Quantitative Ermittlung der Scherdeformation").

Schon ab einem geringen Mikroballonanteil von 0,5 Gew.-% ist ein Klebkraft-Abfall zur ungeschäumten Selbstklebemasse von 41 % zu beobachten, und ab einer Schäumung mit 2 Gew.-% Mikroballons sinkt die Klebkraft auf Stahl gegen 0 N/cm.

**Vergleichsbeispiel 1.2.**

Hotmelt-Masserezeptur auf Basis von Naturkautschuk:

Tabelle 4: NR-Rezepturen aus Hotmelt

| | Rezeptur F | G | H | I | |
|---|---|---|---|---|---|
| Kautschuk SVR 3L | 50,0 | 49,25 | 48,5 | 45,0 | Hotmelt |
| Dertophene T110 | 50,0 | 49,25 | 48,5 | 45,0 | |
| Expancel 051 DU 40 | 0,0 | 1,5 | 3,0 | 10,0 | |

Es werden 4 Homelt-Klebemassen nach oben stehender Rezeptur mit unterschiedlichen Mikroballongehalten (0; 1,5; 3; 10 Gew.-%) nach einen erfindungsgemäßen Verfahren hergestellt.

| | | |
|---|---|---|
| PWE-Parameter: | Temperatur (2 Heizzonen und Zentralspindel) = | 60 °C |
| | Temperatur (Düse) = | 130 °C |
| | Drehzahl (Schnecken) = | 100 U/min |
| ESE-Parameter: | Temperatur (4 Heizzonen) = | 140 °C |
| | Temperatur (Düse) = | 140 °C |
| | Drehzahl (Schnecke) = | 68 U/min |
| Walzenauftrags-werkparameter: | Temperatur (Rakelwalze) = | 140 °C |
| | Temperatur (Beschichtungswalze) = | 120 °C |

Die Herstellung erfolgt in einem Verfahren, wie es in der Offenbarung zu Figur 1 beschrieben ist.

Der Naturkautschuk und das Klebharz Dertophene 110 werden dem Planetwalzenextruder als Granulat zugeführt und compoundiert. Der so homogenisierte Massestrang wird nach Düsenaustritt in den Einzugsbereich des Einschneckenextruders weitergeleitet und gleichzeitig werden die Mikroballons zudosiert. Neben homogener Verteilung in der Polymermatrix werden die thermoplastischen Polymerhüllen der Mikroballons im Einschneckenextruder bei 140 °C erweicht und bei Düsenaustritt beziehungsweise Druckausgleich dehnt sich das eingekapselte Isobutan aus, und folglich expandieren die Mikroballons.

Anschließend wird diese Masse im Walzenauftragswerk auf eine 23 μm PET-Folie mit 50 g/m² beschichtet, mit einer Trennfolie oder Trennpapier eingedeckt und anschließend zu einem Ballen aufgewickelt.

Die so hergestellte geschäumte Selbstklebemasse erreicht im Vergleich zu der geschäumten Lösungsmittelmasse mit gleicher Grundrezeptur (siehe oben Tabelle 2 und Tabelle 3) und konstantem Flächengewicht von 50 g/m$^2$ auf 23 $\mu$m PET folgende Klebtechnische Eingenschaften (siehe Tabelle 5: Rezepturen F- I):

Tabelle 5: Klebtechnische Eigenschaften, Verfahrensvergleich

| | | Mikroballongehalt [%] | Dichte [kg/m³] | Klebkraft auf Stahl [N/cm] | Klebkraft-Verlust [%] | Raumfüllungsgrad MB [%] |
|---|---|---|---|---|---|---|
| **Lösungsmittel** | **Rezeptur A** | 0 | 990 | 4,9 | 0 | 0,0 |
| | **B** | 0,5 | 670 | 2,9 | 40,8 | 33,1 |
| | **C** | 1,0 | 540 | 2,4 | 51,0 | 46,5 |
| | **D** | 1,5 | 470 | 1,1 | 77,6 | 53,7 |
| | **E** | 2,0 | 400 | 0,3 | 93,9 | 61,0 |
| **Hotmelt** | **F** | 0 | 990 | 5,3 | 0 | 0,0 |
| | **G** | 1,5 | 480 | 5,2 | 1,9 | 52,7 |
| | **H** | 3,0 | 360 | 5,1 | 3,8 | 65,1 |
| | **I** | 10,0 | 200 | 4,0 | 24,5 | 81,6 |

Vergleicht man die Muster D (aus Lösungsmittel mit 1,5 Gew.-% und 470 kg/m$^3$) und G (Hotmelt mit 1,5 Gew.-% und 480 kg/m$^3$) direkt miteinander wird deutlich, dass der Verlust der Klebkraft einer geschäumten Lösungsmittelmasse hier schon bei 78% liegt und bei einer geschäumten Hotmelt-Klebemasse erst bei 2 %.

Selbst nach der Schäumung mit einem hohen Mikroballongehalt von 10 Gew.-% und einer daraus resultierenden Dichte von 200 kg/m$^3$ eines Hotmelt-Selbstklebebandes gleicher Masse-Basis findet nur ein geringer Klebkraft-Abfall von 25 % statt.

Mit steigendem Mikroballongehalt beziehungsweise sinkender Dichte erhöht sich der Raumfüllungsgrad der Mikroballons in der Polymermatrix. Die theoretisch dichteste Kugelpackung ist bei 74 %-Raumfüllungsgrad erreicht, dies entspricht in diesem Beispiel einer Dichte von 274 kg/m$^3$. Mit dem erfindungsgemäßen Verfahren lassen sich Schäume mit geringem Klebkraftabfall auch mit Raumgewichten kleiner als 274 kg/m$^3$ herstellen.

**Vergleichsbeispiel**

Verwendung der NR-Selbstklebemassen aus dem Vergleichsbeisniel 1.2.

Um die aufgeschäumten Mikroballons in der Selbstklebemasse zu zerstören, wurden die zu untersuchenden Muster unter Vakuum gepresst:

Parameter Presse:

➢ Temperatur: 150 °C
➢ Anpresskraft: 10 kN
➢ Vakuum: - 0,9 bar
➢ Presszeit: 90 s

Tabelle 6: Nachweis der Verfahrensvorteile

| | Rezeptur | MB-Gehalt [%] | Masseauftrag [g/m$^2$] | Dicke [$\mu$m] | Dichte [kg/m$^3$] | Dicke [$\mu$m] *entschäumt* | Dichte [kg/m$^3$] *entschäumt* | Klebkraft Stahl [N/cm] | Klebkraft Stahl [N/cm] *entschäumt* | Klebkraftzuwachs [%] |
|---|---|---|---|---|---|---|---|---|---|---|
| aus Lösungsmittel | A | 0 | 50 | 51 | 990,0 | 50 | 1000,0 | 4,9 | 4,9 | 0,0 |
| | B | 0,5 | 50 | 75 | 670,0 | | | 2,9 | | |
| | C | 1 | 50 | 93 | 540,0 | 51 | 980,4 | 2,4 | 4,8 | 50,0 |
| | D | 1,5 | 50 | 106 | 470,0 | | | 1,1 | | |
| | E | 2,0 | 50 | 125 | 400 | 51 | 980,4 | 0,3 | 4,9 | 93,9 |
| Hotmelt | F | 0 | 50 | 51 | 990 | 51 | 980,4 | 5,3 | 5,3 | 0,0 |
| | G | 1,5 | 50 | 104 | 480,0 | 48 | 1041,7 | 5,2 | 5,1 | 2,0 |
| | H | 3 | 50 | 139 | 360,0 | 50 | 1000,0 | 5,1 | 5,2 | 1,9 |
| | I | 10 | 50 | 250 | 200 | 49 | 1020,4 | 4,0 | 5,2 | 23,1 |

Die Schäumung einer Selbstklebemasse mittels Mikroballons nach dem erfindungsgemäßen Verfahren hat im Vergleich zur Schäumung aus Lösungsmittel einen deutlich geringeren Einfluss auf die Klebkraft. Der erzielte Klebkraftzuwachs nach Entschäumung unter Druck und Temperatur entspricht in den untersuchten Fällen dem Klebkraftverlust durch die Schäumung.

Die Parameter für die Entschäumung sind so zu wählen, dass die entstandene Klebemasse annähernd eine Dichte aufweist, welche der Dichte entspricht, wie sie die Klebemasse im ungeschäumten Zustand hat.

**Vergleichsbeispiel 2.1.**

Lösungsmittel-Masse auf Basis von SIS:

Tabelle 7: SIS-Rezepturen aus Lösungsmittel

|  | Rezeptur A | B | C | D |  |
|---|---|---|---|---|---|
| **Eurprene Sol T 9113** | 50 | 49 | 47,5 | 46 |  |
| **Regalite R 1125** | 44 | 43 | 41,5 | 40 | **Lösungsmittel** |
| **Ondina G 41** | 5,5 | 5,5 | 5,5 | 5,5 |  |
| **Irganox 1726** | 0,5 | 0,5 | 0,5 | 0,5 |  |
| **Expancel 051 DU 40** | 0 | 2 | 5 | 8 |  |

Feststoffgehalt: 40 Gew.-%
Lösungsmittelgemisch: 67,5 Gew.-% Benzin/22,5 Gew.-% Aceton/10 Gew.-% Toluol

Verarbeitung:

Zugabe aller oben genannten Rohstoffe zu dem Lösungsmittelgemisch aus Benzin, Aceton und Toluol und anschließende Durchmischung bei Raumtemperatur auf einer Rollbank für ca. 10 Stunden.

Die dementsprechend hergestellte Masse wird nun mit einem Rakel bahnförmig auf einen Träger, in diesem Beispiel auf eine 23 $\mu$m dicke PET-Folie mit einem konstantem Masseauftrag von ca. 50 g/m$^2$ aufgebracht.

Die Zugabe und Vermischung der Mikroballons erfolgt unmittelbar vor dem Ausstreichen der jeweiligen Masse.

Die gefertigten Muster werden nach Auftrag der Masse bei Raumtemperatur für 15 Minuten bei Raumtemperatur gelagert, um den Großteil des Lösungsmittelgemisches abdampfen zu lassen und anschließend bei 70 °C für 15 Minuten im Umlufttrockenschrank bis zur Gewichtskonstanz getrocknet.

Die mit expandierbaren Mikroballons versetzten Muster werden außerdem einem Temperatureintrag über 5 Minuten bei 130 °C im Trockenschrank ausgesetzt, um die Schäumung der Selbstklebemasse zu initiieren.

Durch den Temperatureintrag und die sich dadurch ausdehnenden Mikroballons wird eine raue Oberfläche erzeugt. Folglich wird nur eine geringe Verklebungsfläche auf dem Substrat wie zum Beispiel Stahl, erreicht, und es können nur geringe Klebkräfte gegen 0 N/cm bei geschäumten Selbstklebemassen aus Lösungsmittel erzielt werden.

Tabelle 8: Klebtechnische Eigenschaften einer geschäumten Lösungsmittelmasse auf Basis von SIS

|  | MB-Gehalt [%] | Masseauftrag [g/m$^2$] | Dicke [$\mu$m] | Dichte [kg/m$^3$] | Klebkraft Stahl [N/cm] | Klebkraft-Verlust [%] |
|---|---|---|---|---|---|---|
| aus Lösungs mittel | 0 | 51,3 | 51 | 1005,9 | 9,1 | 0 |
|  | 2 | 50,6 | 87 | 581,6 | 0 | 100 |
|  | 5 | 52,4 | 136 | 385,3 | 0 | 100 |
|  | 8 | 49,5 | 160 | 309,4 | 0 | 100 |

Auch hier am Beispiel einer Lösungsmittelmasse auf Basis von Synthesekautschuk (Styrol-Isopren-Styrol Blockcopolymer) ist offensichtlich, dass bereits bei einem Mikroballonanteil von 2 Gew.-% keine Klebkraft mehr vorhanden ist.

**Vergleichsbeispiel 2.2.**

Hotmelt-Masse auf Basis von SIS:

Tabelle 9: SIS-Rezepturen aus Hotmelt

|  | Rezeptur A | B | C | D |  |
|---|---|---|---|---|---|
| Eurprene Sol T 9113 | 50 | 49 | 47,5 | 46 |  |
| Regaline R 1125 | 44 | 43 | 41,5 | 40 | Hotmelt |
| Ondina G 41 | 5,5 | 5,5 | 5,5 | 5,5 |  |
| Irganox 1726 | 0,5 | 0,5 | 0,5 | 0,5 |  |
| Expancel 051 DU 40 | 0 | 2 | 5 | 8 |  |

Die Herstellung erfolgt in einem Verfahren, wie es in der Offenbarung zu Figur 1 beschrieben ist.

Vergleich der klebtechnischen Eigenschaften bei gleicher Masserezeptur, aber unterschiedlicher Verfahren zur Herstellung (aus Lösungsmittel und aus Hotmelt nach dem erfindungsgemäßen Verfahren):

|  | MB-Gehalt [%] | Masseauftrag [g/m$^2$] | Dicke [μm] | Dichte [kg/m$^3$] | Klebkraft Stahl [N/cm] | Klebkraft-Verlust [%] |
|---|---|---|---|---|---|---|
| aus Lösungsmittel | 0 | 51,3 | 51 | 1005,9 | 9,1 | 0 |
|  | 2 | 50,6 | 87 | 581,6 | 0 | 100 |
|  | 5 | 52,4 | 136 | 385,3 | 0 | 100 |
|  | 8 | 49,5 | 160 | 309,4 | 0 | 100 |
| Hotmelt | 0 | 48,2 | 48 | 1004,2 | 9,2 | 0 |
|  | 2 | 45,0 | 76 | 592,1 | 12,4 | -34,8 |
|  | 5 | 49,8 | 110 | 452,7 | 10,1 | -9,8 |
|  | 8 | 45,3 | 139 | 325,9 | 9,8 | -6,5 |

Tabelle 10: Klebtechnische Eigenschaften, Verfahrensvergleich

Im Vergleich zu dem ungeschäumten Muster ohne Mikroballons aus Hotmelt wird durch die Schäumung nach einem erfindungsgemäßen Verfahren bei Masseauftragskonstanz ein Klebkraftzuwachs erreicht.

**Vergleichsbeispiel 3**

Masserezepturen auf Basis von SBS, jeweils Gew.%:

Tabelle 11: Masserezepturen auf Basis von SBS

|  |  | Rezeptur A | B | C |
|---|---|---|---|---|
| Kraton D-1118 | [%] | 25 | 22,75 | 23,5 |
| Kraton D-1102 | [%] | 25 | 22,75 | 23,5 |
| Dercolyte A115 | [%] | 49 | 45,5 | 47 |
| Expancel 051 DU 40 | [%] | 0 | 8 | 5 |
| Irganox 1076 | [%] | 1 | 1 | 1 |

Die Herstellung erfolgt in einem Verfahren, wie es in der Offenbarung zu Figur 1 beschrieben ist.

Tabelle 12: Klebtechnische und anwendungstechnische Eigenschaften von einer Synthesekautschukmasse

|  | ungeschäumt | | geschäumt | |
|---|---|---|---|---|
| Rezeptur | A | A | B | C |
| MA [g/m$^2$] | 113 | 330 | 119 | 310 |
| Dicke [μm] | 95 | 278 | 350 | 590 |

(fortgesetzt)

| | ungeschäumt | | geschäumt | |
|---|---|---|---|---|
| **Dichte** [kg/m$^3$] | 1189 | 1187 | 340 | 525 |
| **KKS 90°** [N/cm] | 10,7 | 22,1 | 14,2 | 19,2 |
| | | | | |
| **Kälteschlagbeständigkeit** [°C] | +10 | +10 | -10 | -10 |

Durch die Schäumung der Selbstklebemasse findet nahezu kein Klebkraft-Verlust statt. Die Schlagbeständigkeit bei tiefen Temperaturen wird durch die Schäumung wesentlich verbessert.

**Vergleichsbeispiel 4**

Verwendung der SIS-Selbstklebemassen aus dem Vergleichsbeispiel 2.1. (aus Lösungsmittel) und 2.2. (aus Hotmelt).

Um die aufgeschäumten Mikroballons in der Selbstklebemasse zu zerstören, wurden die zu untersuchenden Muster unter Vakuum gepresst:

Parameter Presse:

➢ Temperatur: 150 °C
➢ Anpresskraft: 10 kN
➢ Vakuum: - 0,9 bar
➢ Presszeit: 90 s

Tabelle 13: Nachweis der Verfahrensvorteile

| | MB-Gehalt [%] | Masseauftrag [g/m$^2$] | Dicke [$\mu$m] | Dichte [kg/m$^3$] | Dicke [$\mu$m] *nach Presse* | Dichte [kg/m$^3$] *nach Presse* | Klebkraft Stahl [N/cm] | Klebkraft Stahl [N/cm] *nach Presse* | Klebkraft-Verlust [%] |
|---|---|---|---|---|---|---|---|---|---|
| aus Lösungsmittel | 0 | 51,3 | 51 | 1005,9 | 52 | 986,5 | 9,1 | 8,9 | -2,2 |
| | 2 | 50,6 | 87 | 581,6 | 52 | 973,1 | 0 | 8,1 | 100,0 |
| | 5 | 52,4 | 136 | 385,3 | ----- | ----- | 0 | ---- | ---- |
| | 8 | 49,5 | 160 | 309,4 | ----- | ----- | 0 | ---- | ---- |
| Hotmelt | 0 | 48,2 | 48 | 1.004,2 | 51 | 945,1 | 9,2 | 9,1 | -1,1 |
| | 2 | 47,3 | 78 | 606,4 | 48 | 985,4 | 12,4 | 9,0 | -37,8 |
| | 5 | 49,8 | 110 | 452,7 | 52 | 957,7 | 10,1 | 9,4 | -7,4 |
| | 8 | 47,8 | 140 | 341,43 | 49 | 975,5 | 9,8 | 9,1 | -7,7 |

Die Schäumung einer Selbstklebemasse mittels Mikroballons hat also keinen negativen Einfluss auf die Klebkraft. Im Vergleich zu der jeweiligen ungeschäumten Masse steigt bei diesem Massesystem die Klebkraft sogar an. Dies ist erklärbar durch das bessere Benetzungsverhalten eines Schaumes auf dem Substrat und die höhere Dicke der geschäumten Muster im Vergleich zu jeweiligen entschäumten Muster.

**Beispiel 5**

Masserezeptur auf Basis von Naturkautschuk:

| | |
|---|---|
| Kautschuk SVR 3L | 47,5 Gew.-% |
| Piccotac 1100-E | 47,5 Gew.-% |
| Expancel 051 DU 40 | 5,0 Gew.-% |

| PWE-Parameter: | | |
|---|---|---|
| | Temperatur (2 Heizzonen) = | 50 °C |
| | Temperatur (Zentralspindel) = | 10 °C |
| | Temperatur (Düse) = | 160 °C |
| | Drehzahl (Schnecken) = | 25 U/min |

| ESE-Parameter: | | |
|---|---|---|
| | Temperatur (Heizzone 1) = | 20 °C |
| | Temperatur (Heizzone 2) = | 60 °C |
| | Temperatur (Heizzone 3) = | 100 °C |
| | Temperatur (Heizzone 4) = | 140 °C |
| | Temperatur (Düse) = | 140 °C |
| | Drehzahl (Schnecke) = | 62 U/min |

| Walzenauftrags-werkparameter: | | |
|---|---|---|
| | Temperatur (Rakelwalze) = | 130 °C |
| | Temperatur (Beschichtungswalze) = | 130 °C |

Die Herstellung erfolgt in einem Verfahren, wie es in der Offenbarung zu Figur 1 beschrieben ist.

Der Naturkautschuk und das Harz Piccotac 1100-E werden dem Planetwalzenextruder als Granulat zugeführt und compoundiert. Der so homogenisierte Massestrang wird nach Düsenaustritt in den Einzugsbereich des Einschneckenextruders weitergeleitet und gleichzeitig werden die Mikroballons zudosiert. Neben homogener Verteilung in der Polymermatrix werden die thermoplastischen Polymerhüllen der Mikroperlen im Einschneckenextruder bei 140 °C erweicht und bei Düsenaustritt beziehungsweise Druckausgleich dehnt sich das eingekapselte Isobutan aus und folglich expandieren die Mikroballons.

Anschließend wird diese Masse im Walzenauftragswerk auf einen Gewebeträger beschichtet und zu einem Ballen aufgewickelt.

Diese geschäumte Selbstklebemasse erreicht folgende klebtechnische Eigenschaften:

Tabelle 14: Klebtechnische Eigenschaften eines einseitig klebenden Naturkautschuk-Klebebandes

| geschäumtes einseitig klebendes NR-Band | | |
|---|---|---|
| **Masseauftrag** | [g/m$^2$] | 106 |
| **Gesamtdicke** | [$\mu$m] | 415 |
| **Dichte** | [kg/m$^3$] | 320 |
| **Klebkraft auf Stahl 180°** | [N/cm] | 2,6 |
| **Klebkraft auf PE 180°** | [N/cm] | 1,7 |

**Beispiel 6**

Masserezepturen auf Basis von Naturkautschuk:

|  | A (ungeschäumt) | B (geschäumt) |
|---|---|---|
| Kautschuk SVR 3L | 49,5 Gew.-% | 48,35 Gew.-% |
| Piccotac 1100-E | 49,5 Gew.-% | 48,35 Gew.-% |
| Expancel 051 DU 40 |  | 2,3 Gew.-% |
| Irganox 1076 | 1,0 Gew.-% | 1,0 Gew.-% |

| PWE-Parameter: | Temperatur (2 Heizzonen) = | 50 °C |
|---|---|---|
|  | Temperatur (Zentralspindel) = | 10 °C |
|  | Temperatur (Düse) = | 160 °C |
|  | Drehzahl (Schnecken) = | 50 U/min |
| ESE-Parameter: |  |  |
|  | Temperatur (Heizzone 1) = | 20 °C |
|  | Temperatur (Heizzone 2) = | 60 °C |
|  | Temperatur (Heizzone 3) = | 100 °C |
|  | Temperatur (Heizzone 4) = | 140 °C |
|  | Temperatur (Düse) = | 140 °C |
|  | Drehzahl (Schnecke) = | 68 U/min |
| Walzenauftrags-werkparameter: | Temperatur (Rakelwalze) = | 130 °C |
|  | Temperatur (Beschichtungswalze) = | 130 °C |

Die Herstellung erfolgt in einem Verfahren, wie es in der Offenbarung zu Figur 1 beschrieben ist.

Der Naturkautschuk und das Harz Piccotac 1100-E werden dem Planetwalzenextruder als Granulat zugeführt und compoundiert. Der so homogenisierte Massestrang wird nach Düsenaustritt in den Einzugsbereich des Einschnekkenextruders weitergeleitet und bei Rezeptur B werden gleichzeitig die Mikroballons zudosiert. Neben homogener Verteilung in der Polymermatrix werden die thermoplastischen Polymerhüllen der Mikroperlen im Einschneckenextruder bei 140 °C erweicht und bei Düsenaustritt beziehungsweise Druckausgleich dehnt sich das eingekapselte Isobutan aus und folglich expandieren die Mikroballons.

Sowohl die geschäumte als auch die ungeschäumte Naturkautschukmasse wurde auf einen gekreppten Papierträger mit rückseitigem Release beschichtet und anschließend klebtechnisch miteinander verglichen. Auffallend ist, dass 25g/m² Masse eingespart werden können, um etwa die gleiche Schichtdicke einzustellen und gleichzeitig auf einem ähnlichen klebtechnischen Niveau mit einer ungeschäumten NR-Masse zu liegen.

Tabelle 15: Klebtechnische Eigenschaften

|  |  | A | B |
|---|---|---|---|
| **Masseauftrag** | [g/m²] | 50 | 25 |
| **Gesamtdicke** | [μm] | 144 | 138 |
| **Dichte** | [kg/m³] | 950 | 590 |
| **Klebkraft auf Stahl 180°** | [N/cm] | 2,7 | 2,3 |
| **Oberflächenrauigkeit Ra** | μm | 8,6 | 7,7 |

Dieses Beispiel belegt, dass sich mit dem erfindungsgemäßen Verfahren selbstklebende Produkte herstellen lassen, welche einen geringen Klebkraftverlust aufweisen, obwohl die Masseschichtdicke dem Durchmesser der expandierten Mikroballons entspricht.

**Beispiel 7**

Masserezeptur auf Basis von SIS:

| Vector 4113 | 47,5 Gew.-% |
|---|---|
| Pentalyn H-E | 47,5 Gew.-% |
| Expancel 051 DU 40 | 5,0 Gew.-% |

| PWE-Parameter: | Temperatur (2 Heizzonen und Zentralspindel) = | 80 °C |
| | Temperatur (Düse) = | 130 °C |
| | Drehzahl (Schnecken) = | 50 U/min |
| | | |
| Walzenauftrags-werkparameter: | Temperatur (Rakelwalze) = | 140 °C |
| | Temperatur (Beschichtungswalze) = | 130 °C |

Die Herstellung erfolgt in einem besonders vorteilhaften Verfahren, wie es in der Offenbarung zu Figur 3 beschrieben ist.

Das Styrolblockcopolymer Vector 4113, das Harz Pentalyn H-E und auch die Mikroballons Expancel 051 DU 40 werden dem Planetwalzenextruder zugeführt. Neben der Compoundierung der Polymermatrix und homogener Verteilung der Mikroballons in derselben werden die thermoplastischen Polymerhüllen der Mikroballons im Extruder bei 140 °C erweicht und bei Düsenaustritt beziehungsweise Druckausgleich dehnt sich das eingekapselte Isobutan aus und folglich expandieren die Mikroballons. Anschließend wird diese Masse im Walzenauftragswerk auf einen Gewebeträger beschichtet und anschließend zu einem Ballen aufgewickelt.

Diese geschäumte Selbstklebemasse erreicht folgende klebtechnische Eigenschaften:

Tabelle 16: Klebtechnische Eigenschaften eines einseitig klebenden SIS-Selbstklebebandes

| | | A | B |
|---|---|---|---|
| **Masseauftrag** | [g/m$^2$] | 135 | 40 |
| **Gesamtdicke** | [μm] | 430 | 175 |
| **Dichte** | [kg/m$^3$] | 420 | 420 |
| **Klebkraft auf Stahl 180°** | [N/cm] | 13,6 | 8,9 |
| **Klebkraft auf PE 180°** | [N/cm] | 2,8 | 2,3 |
| **SSZ RT 10N** | [min] | > 10.000 | > 10.000 |

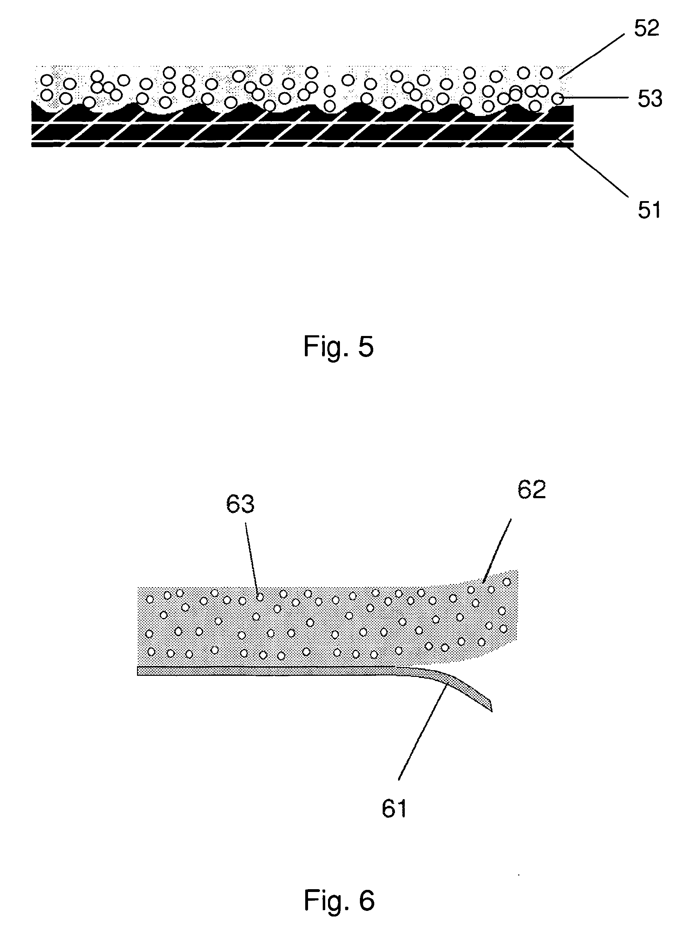

Figur 5 zeigt den Aufbau eines mit Mikroballons 53 geschäumten Selbstklebebandes, bestehend aus einer Klebemasse 52, enthaltend die Mikroballons 53, auf einem Gewebeträger 51.

Die klebtechnischen Eigenschaften der geschäumten Selbstklebemassen liegen bei dieser Erfindung trotz hoher Mikroballongehalte beziehungsweise niedriger Raumgewichte auf dem Niveau der ungeschäumten Klebemasse.

Die Beispiele 6 und 7 belegen, dass sich die erfindungsgemäßen geschäumten Klebemassen hervorragend dazu eignen, die Rauhigkeit oder Struktur von Trägern auszugleichen.

**Beispiel 8**

Masserezeptur auf Basis von SIS:

| Vector 4113 | 47,5 Gew.-% |
| Pentalyn H-E | 47,5 Gew.-% |
| Expancel 051 DU 40 | 5,0 Gew.-% |

| PW E-Parameter: | Temperatur (2 Heizzonen und Zentralspindel) = | 60 °C |
| | Temperatur (Düse) = | 130 °C |
| | Drehzahl (Schnecken) = | 100 U/min |
| | | |
| ESE-Parameter: | Temperatur (4 Heizzonen) = | 140 °C |
| | Temperatur (Düse) = | 140 °C |
| | Drehzahl (Schnecke) = | 68 U/min |
| | | |
| Walzenauftrags-werkparameter: | Temperatur (Rakelwalze) = | 140 °C |
| | Temperatur (Beschichtungswalze) = | 140 °C |

Die Herstellung erfolgt in einem Verfahren, wie es in der Offenbarung zu Figur 1 beschrieben ist.

Das Styrolblockcopolymer Vector 4113 und das Harz Pentalyn H-E werden dem Planetwalzenextruder als Granulat zugeführt und compoundiert. Der so homogenisierte Massestrang wird nach Düsenaustritt in den Einzugsbereich des Einschneckenextruders weitergeleitet und gleichzeitig werden die Mikroballons zudosiert. Neben homogener Verteilung in der Polymermatrix werden die thermoplastischen Polymerhüllen der Mikroperlen im Einschneckenextruder bei 140 °C erweicht und bei Düsenaustritt beziehungsweise Druckausgleich dehnt sich das eingekapselte Isobutan aus und folglich expandieren die Mikroballons.

Anschließend wird diese Masse im Walzenauftragswerk auf ein 80 $\mu$m Trennpapier (beidseitig silikonisiert, unterschiedliche Trennkräfte: Beschichtungsseite= 95 cN/cm und Trennseite= 13 cN/cm) auf die niedrig silikonisierte Seite beschichtet und anschließend aufgewickelt.

Dieses doppelseitig selbstklebende Schaumfix erreicht folgende klebtechnische Eigenschaften:

Tabelle 17: Klebtechnische Eigenschaften eines SIS-Schaumfixes

| Doppelseitig klebendes SIS-Schaumfix | | |
|---|---|---|
| **Masseauftrag** | [g/m$^2$] | 160 |
| **Dicke** | [$\mu$m] | 340 |
| **Dichte** | [kg/m$^3$] | 470 |
| **Klebkraft auf Stahl 90°** offene Seite | [N/cm] | 21,8 |
| **Klebkraft auf PE 90°** offene Seite | [N/cm] | 12,5 |
| **SSZ RT 10 N** offene Seite | [min] | 12.600 |

**Beispiel 9**

Masserezeptur auf Basis von SBS/SIS:

|  |  |
|---|---|
| Kraton D-1165 | 23,0 Gew.-% |
| Taipol SBS 3202 | 23,0 Gew.-% |
| Dercolyte A115 | 46,0 Gew.-% |
| Expancel 051 DU 40 | 8,0 Gew.-% |

| PWE-Parameter: | Temperatur (2 Heizzonen und Zentralspindel) = | 130 °C |
|---|---|---|
|  | Temperatur (Düse) = | 160 °C |
|  | Drehzahl (Schnecken) = | 100 U/min |

| ESE-Parameter: | Temperatur (4 Heizzonen) = | 50 °C |
|---|---|---|
|  | Temperatur (Düse) = | 50 °C |
|  | Drehzahl (Schnecke) = | 68 U/min |
| Walzenauftrags-werkparameter: | Temperatur (Rakelwalze) = | 140 °C |
|  | Temperatur (Beschichtungswalze) = | 140 °C |

Die Herstellung erfolgt in einem Verfahren, wie es in der Offenbarung zu Figur 1 beschrieben ist.

Das Kraton D-1165, Taipol SBS 3202 und das Dercolyte A115 werden dem Planetwalzenextruder als Granulat in entsprechender Menge zugeführt und compoundiert. Der so homogenisierte Massestrang wird nach Düsenaustritt in den Einzugsbereich des Einschneckenextruders weitergeleitet und gleichzeitig werden die Mikroballons zudosiert. Neben homogener Verteilung in der Polymermatrix werden die thermoplastischen Polymerhüllen der Mikroperlen im Einschneckenextruder bei 140 °C (durch die Restwärme in der Masse aus dem PWE) erweicht und bei Düsenaustritt beziehungsweise Druckausgleich dehnt sich das eingekapselte Isobutan aus und folglich expandieren die Mikroballons.

Anschließend wird diese Masse im Walzenauftragswerk auf ein 80 $\mu$m Trennpapier (beidseitig silikonisiert; unterschiedliche Trennkräfte: 95 und 13 cN/cm) auf die niedrig silikonisierte Seite beschichtet und anschließend aufgewickelt.

Dieses doppelseitig selbstklebende Schaumfix erreicht folgende klebtechnische Eigenschaften:

Tabelle 18: Klebtechnische Eigenschaften eines SBS-SIS-Schaumfixes

| Doppelseitig klebendes SBS-Schaumfix | | |
|---|---|---|
| **Masseauftrag** | [g/m$^2$] | 300 |
| **Dicke** | [μm] | 850 |
| **Dichte Klebkraft auf Stahl** | [kg/m$^3$] | 350 |
| **90°** offene Seite | [N/cm] | 17,0 |
| **Klebkraft auf PE 90°** offene Seite | [N/cm] | 13,0 |
| **SSZ RT 10N** offene Seite | [min] | >10.000 |

Figur 6 zeigt den Aufbau einer mit Mikroballons 63 geschäumten Klebemasse 62, die auf einem Liner 61 aufgebracht ist.

**Beispiel 10**

Masserezepturen auf Basis von Acrylatcopolymeren:

<u>Ac-Masse A</u>:

| | |
|---|---|
| n-Butylacrylat | 44,2 Gew.-% |
| 2-Ethylhexylacrylat | 44,7 Gew.-% |
| Methylacrylat | 8,6 Gew.-% |
| Acrylsäure rein | 1,5 Gew.-% |
| Bisomer HEMA | 1,0 Gew.-% |

<u>Ac-Masse B</u>:

| | |
|---|---|
| n-Butylacrylat | 44,9 Gew.-% |
| 2-Ethylhexylacrylat | 44,9 Gew.-% |
| N. tert.-Butylacrylamid | 6,2 Gew.-% |
| Acrylsäure rein | 3,0 Gew.-% |
| Maleinsäureanhydrid | 1,0 Gew.-% |

Beide Acrylatmassen A und B werden mit jeweils 5 und 8% Mikroballons abgemischt:

Die oben stehenden Monomergemische (Mengenangaben in Gew.-%) werden in Lösung copolymerisiert. Die Polymerisationsansätze bestehen aus 60 Gew.-% der Monomergemische sowie 40 Gew.-% Lösungsmittel (wie Benzin 60/95 und Aceton). Die Lösungen werden in üblichen Reaktionsgefäßen aus Glas oder Stahl (mit Rückflusskühler, Rührer, Temperaturmesseinheit und Gaseinleitungsrohr) zunächst durch Spülen mit Stickstoff von Sauerstoff befreit und dann zum Sieden erwärmt.

Durch Zusatz von 0,2 bis 0,4 Gew.-% eines für die radikalische Polymerisation üblichen Initiators wie Dibenzoylperoxid, Dilauroylperoxid oder Azobisisobutyronitril wird die Polymerisation ausgelöst.

Während der Polymerisationszeit von etwa 20 Stunden wird je nach Viskosität gegebenenfalls mehrmals mit weiterem Lösungsmittel verdünnt, so dass die fertigen Polymerlösungen einen Feststoffgehalt von 35 bis 55 Gew.-% aufweisen.

Die Aufkonzentration findet durch Erniedrigen des Druckes und/oder Erhöhung der Temperatur statt.

Die Herstellung der mit Mikroballons abgemischten Selbstklebemasse erfolgt in einem Verfahren, wie es in der Offenbarung zu Figur 1 beschrieben ist.

Die Acrylatmasse wird in Strangform dem kontinuierlichen Mischaggregat, hier einem Doppelschneckenextruder, zugeführt und gleichzeitig werden die Mikroballons dazudosiert. Neben homogener Verteilung in der Polymermatrix werden die thermoplastischen Polymerhüllen der Mikroballons im beheizten Doppelschneckenextruder bei 140 °C erweicht und bei Düsenaustritt beziehungsweise Druckausgleich dehnt sich das eingekapselte Isobutan aus und folglich expandieren die Mikroballons.

Anschließend wird diese Masse im Walzenauftragswerk auf ein 80 μm Trennpapier (beidseitig siliconisiert; unterschiedliche Trennkräfte: 95 und 13 cN/cm) auf die niedrig siliconisierte Seite beschichtet und anschließend aufgewickelt.

Folgende Klebtechnische Eigenschaften wurden für die Ac-Massen A und B eingestellt:

Tabelle 19: Klebtechnische Eigenschaften der Acrylatmasse A

| Ac-Masse A | | | | |
|---|---|---|---|---|
| MB-Gehalt [%] | Masseauftrag [g/m$^2$] | Dicke [$\mu$m] | Dichte [kg/m$^3$] | Klebkraft Stahl [N/cm] |
| 0 | 520 | 510 | 1020 | 20,1 |
| 5 | 260 | 491 | 530 | 15,8 |
| 8 | 170 | 459 | 370 | 12,3 |

Tabelle 20: Klebtechnische Eigenschaften der Acrylatmasse B

| Ac-Masse B | | | | |
|---|---|---|---|---|
| MB-Gehalt [%] | Masseauftrag [g/m$^2$] | Dicke [$\mu$m] | Dichte [kg/m$^3$] | Klebkraft Stahl [N/cm] |
| 0 | 530 | 505 | 1050 | 12,5 |
| 5 | 250 | 424 | 590 | 9,2 |
| 8 | 200 | 500 | 400 | 8,1 |

Durch die Schäumung der Acrylat-Masse wird selbst bei geringerem Flächengewicht und ähnlicher Schichtdicke kaum ein Klebkraft-Verlust festgestellt.

Zur Erhöhung der thermischen Scherfestigkeit lassen sich diese Massesysteme hervorragend entweder mittels ionisierender Strahlung oder literaturbekannten Vernetzungssystemen wie zum Beispiel Isocyanaten, Epoxiden oder Phenolharzen vernetzen.

**Patentansprüche**

1. Zu einer Schicht ausgeformte, insbesondere druckempfndliche Klebemasse, die expandierte Mikroballons enthält, wobei die Klebkraft der die expandierten Mikroballons enthaltende Klebemasse im Vergleich zu der Klebkraft einer flächengewichts- und rezepturidentischen Klebemasse, die durch die Zerstörung der durch die expandierten Mikroballons entstandenen Hohlräume entschäumt ist, um höchstens 30 %, bevorzugt um höchstens 20 %, besonders bevorzugt um höchstens 10 % reduziert ist, und wobei die Ausformung der Klebemasse zu einer Schicht mittels eines Ausformaggregats erfolgt, insbesondere ein Kalander, ein Walzenauftragswerk oder ein Spalt, gebildet von einer Walze und einem feststehenden Rakel, wobei die expandierten Mikroballons in die Polymermatrix der Klebemasse zurückgedrückt werden.

2. Klebemasse nach Anspruch 1, **dadurch gekennzeichnet, dass** die Klebkraft der die expandierten Mikroballons enthaltende Klebemasse im Vergleich zu der Klebkraft einer flächengewichts- und rezepturidentischen Klebemasse, die durch die Zerstörung der durch die expandierten Mikroballons entstandenen Hohlräume entschäumt ist, nicht reduziert ist.

3. Klebemasse nach Anspruch 1, **dadurch gekennzeichnet, dass** die Klebkraft der die expandierten Mikroballons enthaltende Klebemasse im Vergleich zu der Klebkraft einer flächengewichts- und rezepturidentischen Klebemasse, die durch die Zerstörung der durch die expandierten Mikroballons entstandenen Hohlräume entschäumt ist, höher ist, bevorzugt um 10 bis 30 %.

4. Klebemasse nach zumindest einem der Ansprüche 1 bis 3, **dadurch gekennzeichnet, dass** die Klebemasse eine Oberflächenrauigkeit von kleiner oder gleich 10 $\mu$m aufweist.

5. Klebemasse nach zumindest einem der vorherigen Ansprüche, **dadurch gekennzeichnet, dass**

der Gehalt an ungeschäumten Mikroballons in der Klebemasse vor der Aufschäumung der Mikroballons zwischen größer 0 Gew.-% und 20 Gew.-%, bevorzugt zwischen größer 0,5 Gew.-% und 20 Gew.-%, besonders bevorzugt zwischen 1,5 Gew.-% und 10 Gew.-%, jeweils bezogen auf die Gesamtmischung der Klebemasse, ist.

6. Klebemasse nach zumindest einem der vorherigen Ansprüche,
**dadurch gekennzeichnet, dass**
das Verhältnis des Raumgewichts der durch die Mikroballons geschäumten Klebemasse zum Raumgewicht der flächengewichts- und rezepturidentischen Klebemasse, die durch die Zerstörung der durch die expandierten Mikroballons entstandenen Hohlräume entschäumt ist, kleiner 0,8 ist.

7. Klebemasse nach zumindest einem der vorherigen Ansprüche,
**dadurch gekennzeichnet, dass**
die Klebemasse aus Naturkautschuk, aus Acrylnitril-Butadienkautschuk, aus Butylkautschuk, aus Styrol-Butadien-Kautschuk, aus Styrolblockcopolymeren oder aus einem Polyolefin, aus Ethylen-Vinyl-Acetat, aus Acrylaten oder einem Compound der genannten Polymere besteht.

8. Klebemasse nach zumindest einem der vorherigen Ansprüche,
**dadurch gekennzeichnet, dass**
die Klebemasse mit einem oder mehreren Additiven wie Alterungsschutzmitteln, Vemetzem, Lichtschutzmitteln, Ozonschutzmitteln, Fettsäuren, Harzen, Weichmachern und Vulkanisationsmitteln, Elektronenstrahlhärtungspromotoren oder UV-Initiatoren und/oder mit einem oder mehreren Füllstoffen wie Ruß, Zinkoxid, Kieselsäure, Silikaten, Kreide und Voll- oder Hohlkugeln abgemischt wird.

9. Klebemasse nach zumindest einem der vorherigen Ansprüche,
**dadurch gekennzeichnet, dass**
die Klebemasse ganz oder teilweise chemisch oder physikalisch mittels ionisierender Strahlung vernetzt wird.

10. Klebemasse nach zumindest einem der vorherigen Ansprüche,
**dadurch gekennzeichnet, dass**
die Mikroballons bei 25 °C einen Durchmesser von 3 $\mu$m bis 40 $\mu$m, insbesondere 5$\mu$ m bis 20 $\mu$m, und/oder nach Temperatureinwirkung einen Durchmesser von 20 $\mu$m bis 200 $\mu$m, insbesondere 40 $\mu$m bis 100 $\mu$m, aufweisen.

11. Verfahren zur Herstellung einer druckempfindlichen Klebemasse, die expandierte Mikroballons enthält, wobei die Bestandteile zur Bildung der Klebemasse wie Polymere, Harze oder Füllstoffe in einem ersten Mischaggregat gemischt werden,
die gemischte, insbesondere homogene Klebemasse aus dem ersten Mischaggregat in ein zweites Mischaggregat übergeben wird, in das gleichzeitig die nicht expandierten Mikroballons aufgegeben werden,
die Mikroballons in dem zweiten Mischaggregat oder beim Austritt aus dem zweiten Mischaggregat expandiert werden,
die Klebemassemischung mitsamt der expandierten Mikroballons in einem Ausformaggregat zu einer Schicht ausgeformt wird, wobei das Ausformaggregat ein Kalander, ein Walzenauftragswerk oder ein Spalt, gebildet von einer Walze und einem feststehenden Rakel, ist,
wobei die expandierten Mikroballons in die Polymermatrix der Klebemasse zurückgedrückt werden,
die Klebemassemischung mitsamt der expandierten Mikroballons gegebenenfalls auf ein bahnförmiges Trägermaterial aufgebracht wird.

12. Verfahren zur Herstellung einer druckempfindlichen Klebemasse, die expandierte Mikroballons enthält, wobei die Bestandteile zur Bildung der Klebemasse wie Polymere, Harze oder Füllstoffe mit nicht expandierten Mikroballons in einem ersten Mischaggregat unter Überdruck gemischt werden und auf eine Temperatur unterhalb der Expansionstemperatur der Mikroballons temperiert werden,
die gemischte, insbesondere homogene Klebemasse aus dem ersten Mischaggregat in ein zweites Aggregat übergeben werden und unter Überdruck auf Expansionstemperatur erhitzt werden,
die Mikroballons in dem zweiten Aggregat oder beim Austritt aus dem zweiten Aggregat expandiert werden,
die Klebemassemischung mitsamt der expandierten Mikroballons in einem Walzenauftragswerk zu einer Schicht ausgeformt wird,
wobei die expandierten Mikroballons in die Polymermatrix der Klebemasse zurückgedrückt werden,
die Klebemassemischung mitsamt der expandierten Mikroballons gegebenenfalls auf ein bahnförmiges Träger- oder Releasematerial aufgebracht wird.

**13.** Verfahren zur Herstellung einer druckempfindlichen Klebemasse, die expandierte Mikroballons enthält, wobei die Bestandteile zur Bildung der Klebemasse wie Polymere, Harze oder Füllstoffe und die nicht expandierten Mikroballons in einem ersten Mischaggregat gemischt werden und unter Überdruck auf Expansionstemperatur erhitzt werden,
die Mikroballons beim Austritt aus dem Mischaggregat expandiert werden,
die Klebemassemischung mitsamt der expandierten Mikroballons in einem Walzenauftragswerk zu einer Schicht ausgeformt wird,
wobei die expandierten Mikroballons in die Polymermatrix der Klebemasse zurückgedrückt werden,
die Klebemassemischung mitsamt der expandierten Mikroballons gegebenenfalls auf ein bahnförmiges Träger- oder Releasematerial aufgebracht wird.

**14.** Verfahren zur Herstellung einer druckempfindlichen Klebemasse nach zumindest einem der Ansprüche 11 bis 13, **dadurch gekennzeichnet, dass**
die Klebemasse in einem Walzenauftragswerk ausgeformt und auf das Trägermaterial aufgebracht wird.

**15.** Verfahren zur Herstellung einer druckempfindlichen Klebemasse nach zumindest einem der Ansprüche 11 bis 14, **dadurch gekennzeichnet, dass**
die Dicke der Klebemasse in einem Klebeband auf einem bahnförmigen Trägermaterial zwischen 20 $\mu$m und 3000 $\mu$m, vorzugsweise zwischen 40 $\mu$m und 150 $\mu$m beträgt oder aufgetragen auf einem Releasematerial 20 $\mu$m bis 2000 $\mu$m.

**16.** Verfahren nach mindestens einem der vorherigen Ansprüche 11-15, **dadurch gekennzeichnet, dass**
das erste Mischaggregat ein kontinuierliches Aggregat ist, insbesondere ein Planetwalzenextruder, ein Einschnekken- oder Doppelschneckenextruder oder ein Stiftextruder, oder
das erste Mischaggregat ein diskontinuierliches Aggregat ist, insbesondere ein Z-Kneter oder ein Innenmischer und/oder
das zweite Mischaggregat ein Einschneckenextruder ist.

**17.** Klebemasse, insbesondere Selbstklebemasse, erhalten nach einem Verfahren nach mindestens einem der vorigen Ansprüche.

**18.** Verwendung einer Klebemasse, insbesondere Selbstklebemasse, erhalten nach einem Verfahren nach mindestens einem der vorherigen Ansprüche in einem ein- oder doppelseitig klebenden Klebeband.

**19.** Verwendung nach Anspruch 18, **dadurch gekennzeichnet, dass**
als Trägermaterial eine Folie, ein Gewebe oder ein Papier verwendet wird.

**20.** Verwendung nach Anspruch 19, **dadurch gekennzeichnet, dass**
die Klebemasse auf einer Trennfolie oder einem Trennpapier aufgebracht wird.

**Claims**

**1.** Adhesive, more particularly pressure-sensitive adhesive, which is shaped to a layer and which comprises expanded microballoons, the bond strength of the adhesive comprising the expanded microballoons being reduced by not more than 30%, preferably by not more than 20%, more preferably by not more than 10%, in comparison to the bond strength of an adhesive of identical coatweight and formula which has been defoamed by the destruction of the voids produced by the expanded microballoons, and the adhesive being shaped to a layer by means of a shaping assembly, more particularly a calender, a roll applicator or a nip formed by a roll and a stationary doctor blade, with the expanded microballoons being pressed back into the polymer matrix of the adhesive.

**2.** Adhesive according to Claim 1, **characterized in that**
the bond strength of the adhesive comprising the expanded microballoons is not reduced in comparison to the bond strength of an adhesive of identical coatweight and formula which has been defoamed by the destruction of the voids produced by the expanded microballoons.

3. Adhesive according to Claim 1
   **characterized in that**
   the bond strength of the adhesive comprising the expanded microballoons is higher, preferably by 10% to 30%, in comparison to the bond strength of an adhesive of identical coatweight and formula which has been defoamed by the destruction of the voids produced by the expanded microballoons.

4. Adhesive according to at least one of Claims 1 to 3,
   **characterized in that**
   the adhesive has a surface roughness of less than or equal to 10 $\mu$m.

5. Adhesive according to at least one of the preceding claims,
   **characterized in that**
   the amount of unfoamed microballoons in the adhesive prior to the foaming of the microballoons is between greater than 0% and 20% by weight, preferably between greater than 0.5% and 20% by weight, more preferably between 1.5% and 10% by weight, based in each case on the overall mixture of the adhesive.

6. Adhesive according to at least one of the preceding claims,
   **characterized in that**
   the ratio of the density of the adhesive foamed by the microballoons to the density of the adhesive of identical coatweight and formula defoamed by the destruction of the voids produced by the expanded microballoons is less than 0.8.

7. Adhesive according to at least one of the preceding claims,
   **characterized in that**
   the adhesive is composed of natural rubber, of acrylonitrile-butadiene rubber, of butyl rubber, of styrene-butadiene rubber, of styrene block copolymers or of a polyolefin, of ethylene-vinyl acetate, of acrylates or of a compound of the stated polymers.

8. Adhesive according to at least one of the preceding claims,
   **characterized in that**
   the adhesive is blended with one or more additives such as ageing inhibitors, crosslinkers, light stabilizers, ozone protectants, fatty acids, resins, plasticizers and vulcanizing agents, electron beam curing promoters or UV initiators and/or with one or more fillers such as carbon black, zinc oxide, silica, silicates, chalk and solid or hollow beads.

9. Adhesive according to at least one of the preceding claims,
   **characterized in that**
   the adhesive is crosslinked wholly or partly chemically or physically by means of ionizing radiation.

10. Adhesive according to at least one of the preceding claims,
    **characterized in that**
    the microballoons have a diameter at 25°C of 3 $\mu$m to 40 $\mu$m, more particularly 5 $\mu$m to 20 $\mu$m, and/or a diameter after temperature exposure of 20 $\mu$m to 200 $\mu$m, more particularly 40 $\mu$m to 100 $\mu$m.

11. Process for producing a pressure-sensitive adhesive which comprises expanded microballoons, wherein
    the constituents for forming the adhesive such as polymers, resins or fillers are mixed in a first mixing assembly,
    the mixed, more particularly homogeneous, adhesive from the first mixing assembly is transferred into a second mixing assembly, into which, at the same time, the unexpanded microballoons are fed,
    the microballoons are expanded in the second mixing assembly or on exit from the second mixing assembly,
    the adhesive mixture together with the expanded microballoons is shaped to a layer in a shaping assembly,
    the shaping assembly bring a calender, a roll applicator or a nip formed by a roll and a stationary doctor blade,
    with the expanded microballoons being pressed back into the polymer matrix of the adhesive,
    the adhesive mixture together with the expanded microballoons is applied where appropriate to a weblike backing material.

12. Process for producing a pressure-sensitive adhesive which comprises expanded microballoons, wherein

the constituents for forming the adhesive such as polymers, resins or fillers are mixed with unexpanded microballoons in a first mixing assembly under superatmospheric pressure and are heated to a temperature below the expansion temperature of the microballoons,

the mixed, more particularly homogeneous, adhesive from the first mixing assembly is transferred to a second assembly and heated to expansion temperature under superatmospheric pressure,

the microballoons are expanded in the second assembly or on exit from the second assembly,

the adhesive mixture together with the expanded microballoons is shaped to a layer in a roll applicator,

with the expanded microballoons being pressed back into the polymer matrix of the adhesive,

the adhesive mixture together with the expanded microballoons is applied where appropriate to a weblike backing material or release material.

13. Process for producing a pressure-sensitive adhesive which comprises expanded microballoons, wherein
the constituents for forming the adhesive such as polymers, resins or fillers and the unexpanded microballoons are mixed in a first mixing assembly and heated to expansion temperature under superatmospheric pressure,

the microballoons are expanded on exit from the mixing assembly,

the adhesive mixture together with the expanded microballoons is shaped to a layer in a roll applicator,

with the expanded microballoons being pressed back into the polymer matrix of the adhesive,

the adhesive mixture together with the expanded microballoons is applied where appropriate to a weblike backing material or release material.

14. Process for producing a pressure-sensitive adhesive according to at least one of Claims 11 to 13, **characterized in that**
the adhesive is shaped in a roll applicator and applied to the backing material.

15. Process for producing a pressure-sensitive adhesive according to at least one of Claims 11 to 14, **characterized in that**
the thickness of the adhesive in an adhesive tape on a weblike backing material is between 20 $\mu$m and 3000 $\mu$m, preferably bvetween 40 $\mu$m and 150 $\mu$m, or, applied to a release material, 20 $\mu$m to 2000 $\mu$m.

16. Process according to at least one of the preceding Claims 11 to 15, **characterized in that**
the first mixing assembly is a continuous assembly, more particularly a planetary roller extruder, a single-screw or twin-screw extruder or a pin extruder, or
the first mixing assembly is a discontinuous assembly, more particularly a Z-type kneader or an internal mixer and/or the second mixing assembly is a single-screw extruder.

17. Adhesive, more particularly self-adhesive, obtained by a process according to at least one of the preceding claims.

18. Use of an adhesive, more particularly self-adhesive, obtained by a process according to at least one of the preceding claims in a single-sided or double-sided adhesive tape.

19. Use according to Claim 18,
**characterized in that**
a film, a fabric or a paper is used as backing material.

20. Use according to Claim 19,
**characterized in that**
the adhesive is applied to a release film or a release paper.

**Revendications**

1. Masse adhésive mise en forme de couche, en particulier sensible à la pression, qui contient des microballons expansés, l'adhésivité de la masse adhésive contenant les microballons expansés, par rapport à l'adhésivité d'une masse adhésive de poids surfacique et de formulation identiques, qui est démoussée par la destruction des espaces creux formés par les microballons expansés, étant réduite d'au plus 30%, de préférence d'au plus 20%, de manière particulièrement préférée d'au plus 10%, la mise en forme de couche de la masse adhésive étant réalisée au moyen d'un appareil de mise en forme, en particulier une calandreuse, un dispositif d'application à cylindres ou une fente, formée par un cylindre et une racle fixe, les microballons expansés étant repoussés dans la matrice polymère de la masse adhésive.

2. Masse adhésive selon la revendication 1, **caractérisée en ce que** l'adhésivité de la masse adhésive contenant les microballons expansés, par rapport à l'adhésivité d'une masse adhésive de poids surfacique et de formulation identiques, qui est démoussée par la destruction des espaces creux formés par les microballons expansés, n'est pas réduite.

3. Masse adhésive selon la revendication 1, **caractérisée en ce que** l'adhésivité de la masse adhésive contenant les microballons expansés, par rapport à l'adhésivité d'une masse adhésive de poids surfacique et de formulation identiques, qui est démoussée par la destruction des espaces creux formés par les microballons expansés, est supérieure, de préférence de 10 à 30%.

4. Masse adhésive selon au moins l'une quelconque des revendications 1 à 3, **caractérisée en ce que** la masse adhésive présente une rugosité de surface inférieure ou égale à 10 μm.

5. Masse adhésive selon au moins l'une quelconque des revendications précédentes, **caractérisée en ce que** la teneur en microballons non moussés dans la masse adhésive, avant le moussage des microballons, est située entre plus de 0% en poids et 20% en poids, de préférence entre plus de 0,5% en poids et 20% en poids, de manière particulièrement préférée entre 1,5% en poids et 10% en poids, à chaque fois par rapport au mélange total de la masse adhésive.

6. Masse adhésive selon au moins l'une quelconque des revendications précédentes, **caractérisée en ce que** le rapport du poids volumique de la masse adhésive moussée par les microballons au poids volumique de la masse adhésive de poids surfacique et de formulation identiques, qui est démoussée par la destruction des espaces creux formés par les microballons expansés, est inférieur à 0,8.

7. Masse adhésive selon au moins l'une quelconque des revendications précédentes, **caractérisée en ce que** la masse adhésive est constituée de caoutchouc naturel, de caoutchouc d'acrylonitrile-butadiène, de caoutchouc de butyle, de caoutchouc de styrène-butadiène, de copolymères à blocs de styrène ou d'une polyoléfine, d'éthylène-acétate de vinyle, d'acrylates ou d'un compound des polymères mentionnés.

8. Masse adhésive selon au moins l'une quelconque des revendications précédentes, **caractérisée en ce que** la masse adhésive est mélangée avec un ou plusieurs additifs, tels que les agents de protection contre le vieillissement, les réticulants, les agents de protection contre la lumière, les agents de protection contre l'ozone, les acides gras, les résines, les plastifiants et les agents de vulcanisation, les promoteurs de durcissement par un rayon électronique ou les initiateurs aux UV et/ou avec une ou plusieurs charges, telles que la suie, l'oxyde de zinc, la silice, les silicates, la craie et les billes pleines ou creuses.

9. Masse adhésive selon au moins l'une quelconque des revendications précédentes, **caractérisée en ce que** la masse adhésive est réticulée totalement ou partiellement, chimiquement ou physiquement au moyen d'un rayonnement ionisant.

10. Masse adhésive selon au moins l'une quelconque des revendications précédentes, **caractérisée en ce que** les microballons présentent, à 25°C, un diamètre de 3 μm à 40 μm, en particulier de 5 μm à 20 μm, et/ou après l'effet de la température, un diamètre de 20 μm à 200 μm, en particulier de 40 μm à 100 μm.

11. Procédé pour la préparation d'une masse adhésive sensible à la pression, qui contient des microballons expansés, les constituants destinés à la formation de la masse adhésive, tels que les polymères, les résines ou les charges, étant mélangés dans un premier appareil de mélange,
la masse adhésive mélangée, en particulier homogène, étant transférée du premier appareil de mélange dans un deuxième appareil de mélange, dans lequel les microballons non expansés sont ajoutés simultanément, les microballons étant expansés dans le deuxième appareil de mélange ou à la sortie du deuxième appareil de mélange,
le mélange de la masse adhésive en ce compris les microballons expansés étant mis sous forme d'une couche dans un appareil de mise en forme, l'appareil de mise en forme étant une calandreuse, un appareil d'application à cylindres ou une fente, formée par un cylindre et une racle fixe,
les microballons expansés étant repoussés dans la matrice polymère de la masse adhésive,
le mélange de la masse adhésive en ce compris les microballons expansés étant le cas échéant appliqué, sur un matériau support en forme de bande.

**12.** Procédé pour la préparation d'une masse adhésive sensible à la pression, qui contient des microballons expansés, les constituants destinés à la formation de la masse adhésive, tels que les polymères, les résines ou les charges, étant mélangés avec des microballons non expansés dans un premier appareil de mélange sous surpression et traités thermiquement à une température inférieure à la température d'expansion des microballons, la masse adhésive mélangée, en particulier homogène, étant transférée du premier appareil de mélange dans un deuxième appareil de mélange et chauffé sous surpression à la température d'expansion, les microballons étant expansés dans le deuxième appareil ou à la sortie du deuxième appareil, le mélange de la masse adhésive en ce compris les microballons expansés étant mis sous forme d'une couche, dans un appareil d'application à cylindres, les microballons expansés étant repoussés dans la matrice polymère de la masse adhésive, le mélange de la masse adhésive en ce compris les microballons expansés étant le cas échéant appliqué, sur un matériau support ou antiadhésif en forme de bande.

**13.** Procédé pour la préparation d'une masse adhésive sensible à la pression, qui contient des microballons expansés, les constituants destinés à la formation de la masse adhésive, tels que les polymères, les résines ou les charges et les microballons non expansés étant mélangés dans un premier appareil de mélange sous surpression et chauffés sous surpression à la température d'expansion, les microballons étant expansés à la sortie de l'appareil de mélange, le mélange de la masse adhésive en ce compris les microballons expansés étant mis sous forme d'une couche, dans un appareil d'application à cylindres, les microballons expansés étant repoussés dans la matrice polymère de la masse adhésive, le mélange de la masse adhésive en ce compris les microballons expansés étant le cas échéant appliqué, sur un matériau support ou antiadhésif en forme de bande.

**14.** Procédé pour la préparation d'une masse adhésive sensible à la pression selon au moins l'une quelconque des revendications 11 à 13, **caractérisé en ce que** la masse adhésive est mise en forme dans un appareil d'application à cylindres et appliquée sur le matériau support.

**15.** Procédé pour la préparation d'une masse adhésive sensible à la pression selon au moins l'une quelconque des revendications 11 à 14, **caractérisé en ce que** l'épaisseur de la masse adhésive dans une bande adhésive appliquée sur un matériau support en forme de bande est entre 20 $\mu$m et 3000 $\mu$m, de préférence entre 40 $\mu$m et 150 $\mu$m ou, appliquée sur un matériau antiadhésif, de 20 $\mu$m à 2000 $\mu$m.

**16.** Procédé selon au moins l'une quelconque des revendications précédentes 11-15, **caractérisé en ce que** le premier appareil de mélange est un appareil continu, en particulier une extrudeuse planétaire, une extrudeuse à une ou deux vis ou une extrudeuse à broches, ou le premier appareil de mélange est un appareil discontinu, en particulier un malaxeur Z ou un mélangeur interne et/ou le deuxième appareil de mélange est une extrudeuse à une vis.

**17.** Masse adhésive, en particulier masse autoadhésive, obtenue selon un procédé selon au moins l'une quelconque des revendications précédentes.

**18.** Utilisation d'une masse adhésive, en particulier d'une masse autoadhésive, obtenue selon un procédé selon au moins l'une quelconque des revendications précédentes dans une bande adhésive monoface ou double face.

**19.** Utilisation selon la revendication 18, **caractérisée en ce qu'**on utilise, comme matériau support, une feuille, un tissu ou un papier.

**20.** Utilisation selon la revendication 19, **caractérisée en ce que** la masse adhésive est appliquée sur une feuille ou un papier de séparation.

Fig. 1

Fig. 2

E + MB

13

11    12

M

31    32

M

33

1

Fig. 3

3

TP

Lösungsmittelbeschichtung mit MB

Spaltdruck ~ 1 N/mm

Spaltdruck ~ 1,8 N/mm

Spaltdruck ~ 3,1 N/mm

Spaltdruck > 4N/mm

Fig. 4

52

53

51

Fig. 5

63

62

61

Fig. 6

Fig. 7

Fig. 8

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 2105877 C
- EP 0257984 A1
- DE 3537433 A1
- WO 9531225 A1
- EP 0693097 A1
- WO 9818878 A1
- DE 19730854 A1
- WO 9532851 A1
- EP 1102809 A1

### In der Beschreibung aufgeführte Nicht-Patentliteratur

- **DONATAS SATAS.** Handbook of Pressure Sensitive Adhesive Technology. 1989